# EUROPÄISCHE PATENTSCHRIFT

(11) **EP 3 231 518 B1**
(45) Veröffentlichungstag und Bekanntmachung des Hinweises auf die Patenterteilung: **11.10.2023**
(21) Anmeldenummer: 16170301.2
(22) Anmeldetag: 19.05.2016
(51) Int. Cl.: B05C 17/005, C09J 9/00

(54) **STANGENFÖRMIGER SCHMELZKLEBSTOFFKÖRPER FÜR HEISSKLEBEPISTOLEN**
BAR-SHAPED HOT MELT ADHESIVE FOR HOT GLUE GUN
ADHÉSIF THERMOFUSIBLE EN FORME DE BARRES POUR PISTOLET DE COLLE CHAUDE

(30) Priorität: 15.04.2016 EP 16000854
(43) Veröffentlichungstag der Anmeldung: 18.10.2017
(73) Patentinhaber: Jowat SE, 32758 Detmold (DE)
(72) Erfinder: SCHRÖDEL, Jürgen, 32758 Detmold (DE); KRONSHAGE, Markus, 32758 Detmold (DE); SCHMIDT, Ulrich, 32758 Detmold (DE)
(74) Vertreter: Von Rohr Patentanwälte Partnerschaft mbB

(56) Entgegenhaltungen:
- EP-A1- 2 330 165
- DE-U1-202012 103 085
- US-A1- 2004 108 335

## Beschreibung

Die vorliegende Erfindung betrifft das technische Gebiet der Schmelzklebstoffe und deren Verwendung in entsprechenden Füge- bzw. Klebeverfahren.

Insbesondere betrifft die vorliegende Erfindung einen stangenförmigen Schmelzklebstoffkörper, gemäß Anspruch 1 insbesondere Schmelzklebstoff-Stick, auf Basis eines reaktiven Schmelzklebstoffs und eines Reinigungs- bzw. Spülmittels, wobei der Schmelzklebstoffkörper vorzugsweise in zylindrischer Form vorliegt und insbesondere zur Verwendung in Schmelzklebepistolen geeignet ist.

Die vorliegende Erfindung betrifft gleichermaßen ein Verfahren zur Herstellung des Schmelzklebstoffkörpers, insbesondere Schmelzklebstoff-Sticks, nach der Erfindung sowie den durch das Verfahren erhältlichen Klebstoffkörper als solchen.

Die vorliegende Erfindung betrifft zudem ein Kit auf Basis einer Schmelzklebstoffaustragsvorrichtung, insbesondere Schmelz- bzw. Heißklebepistole, einerseits und eines Schmelzklebstoffkörpers, insbesondere Schmelzklebstoff-Sticks, nach der Erfindung andererseits.

Weiterhin betrifft die vorliegende Erfindung eine Verpackungseinheit bzw. ein Gebinde, welche bzw. welches mindestens einen erfindungsgemäßen Schmelzklebstoffkörper, insbesondere Schmelzklebstoff-Stick, umfasst.

Die vorliegende Erfindung betrifft weiterhin eine Verwendung des Schmelzklebstoffkörpers, insbesondere Schmelzklebstoff-Sticks, nach der Erfindung für bzw. in Füge- bzw. Klebeverfahren oder dergleichen.

Die vorliegende Erfindung betrifft darüber hinaus eine Verwendung einer farbgebenden Komponente bzw. eines Farbstoffs zur Kenntlichmachung bzw. Bereitstellung einer visuellen bzw. optischen Verschiedenheit von dem Schmelzklebstoffkörper nach der Erfindung zugrundeliegenden Abschnitten, wobei die jeweiligen Abschnitte einen reaktiven Schmelzklebstoff einerseits oder aber ein Reinigungs- bzw. Spülmittel andererseits aufweisen.

Schließlich betrifft die vorliegende Erfindung auch das Verfahren zur Kenntlichmachung bzw. Bereitstellung einer visuellen bzw. optischen Verschiedenheit der zuvor angeführten Abschnitte des Schmelzklebstoffkörpers nach der Erfindung auf Basis des reaktiven Schmelzklebstoffs zum einen sowie des Reinigungsmittels zum anderen.

Bei Schmelzklebstoffen, welche synonym auch als Heißklebstoffe, Heißkleber bzw. *Hotmelts* bezeichnet werden, handelt es sich im Allgemeinen um lösungsmittelfreie und bei Raumtemperatur feste Produkte, die unter Erwärmung bzw. im heißen Zustand einen fließfähigen bzw. flüssigen Zustand annehmen, so dass auf dieser Basis ein Auftrag bzw. eine Applikation auf eine Klebefläche erfolgen kann. Beim Abkühlen mit einer einhergehenden Verfestigung des Schmelzklebstoffs erfolgt dann die Ausbildung einer festen und dauerhaften (Klebe-)Verbindung.

Die zugrundeliegenden Schmelzklebstoffe werden im Allgemeinen in Form von stangenförmigen Schmelzklebstoffkörpern, synonym auch als Schmelzklebstoff-Sticks bzw. Schmelzklebepatronen bezeichnet, bereitgestellt, welche insbesondere zur Verarbeitung in entsprechenden Schmelzklebstoffaustragsvorrichtungen, wie Schmelz- bzw. Heißklebepistolen, vorgesehen sind. In diesem Zusammenhang weisen die Schmelzklebstoffkörper im Allgemeinen eine zylindrische Form mit definierter Höhe des Zylinders (d.h. mit definierter Länge des Schmelzklebstoffkörpers) und mit definierter, insbesondere kreisförmiger Grundfläche (d.h. mit definiertem Durchmesser des Schmelzklebstoffkörpers) auf.

Schmelzklebstoffe sind im Allgemeinen mit dem Vorteil einer schnellen Verarbeitung bei gleichzeitig niedrigem Materialpreis verbunden, wobei zudem verschiedenste Materialien bzw. Substrate verklebt werden können. In diesem Zusammenhang ist auch von Vorteil, dass durch den eingesetzten Schmelzklebstoff etwaige Unebenheiten von zu verklebenden Materialoberflächen ausgeglichen werden können, wobei die resultierende Klebefuge bzw. Klebeschicht zudem eine gewisse Elastizität aufweist.

Auch vor diesem Hintergrund werden Schmelzklebstoffe im Allgemeinen in zahlreichen industriellen Anwendungen eingesetzt, wie z. B. in der Verpackungsindustrie sowie in der Kfz-, Möbel- und Holzindustrie, beispielsweise unter Einsatz entsprechender Laminiertechniken. Auch im Bereich der Elektrotechnik finden Schmelzklebstoffe einen weitreichenden Einsatz, beispielsweise zur mechanischen Stabilisierung, Isolation und Verklebung entsprechender Bauteile. Darüber hinaus werden Schmelzklebstoffe oftmals im privaten Bereich bzw. Heimwerkerbereich aber auch in der Floristik und der Verpackungsindustrie eingesetzt.

Auch vor dem Hintergrund des umfangreichen Einsatzes und der zahlreichen Anwendungen von Schmelzklebstoffen sowohl im industriellen als auch im privaten Bereich besteht im Stand der Technik ein großer Bedarf nach weiterführenden Optimierungen in Bezug auf die diesbezüglich eingesetzten Klebstoffsysteme.

Im Allgemeinen werden im Stand der Technik Schmelzklebstoffe unter Verwendung entsprechender Austragsvorrichtungen, wie insbesondere Schmelz- bzw. Heißklebepistolen, verarbeitet bzw. appliziert. Das verfügbare Produktportfolio für Schmelzklebepistolen teilt sich in verschiedene Anwendungsgebiete, je nach technischem Anforderungsprofil. Verbreitet sind Tankklebepistolen ohne Druckluft, mit Druckluft und Tankpistolen für Kartuschen.

Aufgrund ihres günstigen Preis/Leistungs-Verhältnisses und ihrer einfachen Handhabung haben sich insbesondere auch Schmelz- bzw. Heißklebepistolen für Heißklebe-Sticks etabliert. Dabei wird im Allgemeinen ein stangen- bzw. zylinderförmiger Schmelzklebstoff an der Rückseite der Schmelzklebepistole eingeführt und im Inneren der Schmelzklebepistole durch eine insbesondere elektrisch betriebene Heiz- bzw. Aufschmelzeinrichtung erwärmt und somit in einen fließfähigen bzw. flüssigen Zustand überführt bzw. zum Schmelzen gebracht. Durch mechanisches Nachführen des noch festen Schmelzklebstoffs in die Heiz- bzw. Aufschmelzeinrichtung wird der dort vorhandene verflüssigte Schmelzklebstoff entsprechend weitergeführt und durch eine Austragseinrichtung, insbesondere eine Klebedüse oder dergleichen, welche Bestandteil der Heiz- bzw. Aufschmelzeinrichtung sein kann, ausgetragen und auf ein zu verklebendes Objekt appliziert. Der Transport des insbesondere stangenförmigen Schmelzklebstoffs wird dabei im Allgemeinen durch einen entsprechenden Transportmechanismus gewährleistet, welcher insbesondere manuell betätigt wird.

In diesem Zusammenhang betrifft die WO 2008/101455 A2 bzw. die zu derselben Patentfamilie gehörende DE 10 2007 008 722 A1 eine Heiß- bzw. Schnellklebepistole mit einem pistolenförmigen Gehäuse, welche derart konstruiert ist, dass der zu verarbeitende Schmelzklebestoff mit veränderbarer Geschwindigkeit durch die Schmelzklebepistole hindurchgeführt werden kann, wobei in diesem Zusammenhang eine Anpassung der Heizleistung zum Aufschmelzen des Schmelzklebstoffs vorgenommen werden kann.

Ein Nachteil bei den zur Verarbeitung von Schmelzklebstoffen im Allgemeinen eingesetzten Schmelzklebepistolen ist jedoch mitunter darin zu sehen, dass nach Anwendung bzw. Verarbeitung des Schmelzklebstoffs zuvor aufgeschmolzener Klebstoff insbesondere im Bereich der Heiz- bzw. Aufschmelzeinrichtung sowie der Austragsvorrichtung bzw. Klebedüse verbleibt und dort aushärtet. Dies ist insbesondere im Hinblick auf die nachfolgend noch beschriebenen reaktiven Schmelzklebstoffe problematisch, da diese durch das Vorliegen einer chemischen Nachvernetzung sowie durch die Ausbildung chemischer Klebeverbindungen sozusagen irreversibel aushärten und auch unter thermischer Einwirkung nicht lösbare Klebeverbindungen ausbilden. Dies hat gegebenenfalls zur Folge, dass nicht unmittelbar nach Anwendung gereinigte bzw. von restlichem Schmelzklebstoff befreite Schmelzklebepistolen unbrauchbar werden bzw. vor erneuter Inbetriebnahme aufwendig zerlegt und gereinigt werden müssen.

Im Allgemeinen sind im Stand der Technik zwei Arten von Schmelzklebstoffen bekannt, nämlich die sogenannten nichtreaktiven Schmelzklebstoffe zum einen sowie die reaktiven Schmelzklebstoffe zum anderen:
So werden im Stand der Technik häufig nichtreaktive Schmelzklebstoffe, wie sie beispielsweise auf Basis von Ethylenvinylacetat (EVA) und Polyestern (PES) vorliegen, eingesetzt. Derartige nichtreaktive Schmelzklebstoffe werden auch aufgrund ihres attraktiven Preis/Leistungs-Verhältnisses für eine Vielzahl von Standardanwendungen eingesetzt. Die chemische Grundlage von Klebstoffen in Stickform ist somit insbesondere Ethylenvinylacetat (EVA). In geringerem Umfang sind neben dem Einsatz von Polyestern (PES) auch Heißklebesticks auf der Grundlage von Polyolefin (PO) oder Polyamid (PA) verfügbar. Die zuvor genannten Sticks sind in ihrer chemischen Zusammensetzung grundsätzlich homogen.

Die Anwendungsgebiete beispielsweise für EVA-Sticks sind primär im Bereich Floristik und Verpackungsindustrie zu finden. Die Polyamide werden im Bereich Automobil- und Elektroindustrie eingesetzt.

Nichtreaktive Schmelzklebstoffe zeichnen sich insbesondere durch kurze Offen- und Abbindezeiten aus. Dabei besteht ein zentrales Klebeprinzip von nichtreaktiven Schmelzklebstoffen darin, dass die eigentliche Verklebung maßgeblich physikalisch erfolgt, und zwar bedingt durch die bei der Abkühlung des ausgetragenen Schmelzklebstoffs vorliegende Verfestigung des Klebstoffs. Von daher weisen die in Rede stehenden Klebstoffsysteme auf Basis nichtreaktiver Schmelzklebstoffe zwar insgesamt eine sehr gute Handhabbarkeit, jedoch aufgrund der rein physikalischen Verklebung nicht immer optimale Klebeeigenschaften auf.

Hierzu ist zu den nichtreaktiven Schmelzklebstoffen auch anzuführen, dass diese nach erfolgter Verfestigung grundsätzlich wieder aufgeschmolzen werden können, was zwar die Handhabbarkeit in Schmelzklebepistolen erleichtert, da diese auch bei längeren Betriebsunterbrechungen sozusagen nicht "verstopfen", jedoch in Bezug auf die Klebeeigenschaften als solche nachteilig ist, da ausgebildete Klebeverbindungen mitunter nicht ausreichend wärmestabil sind. Im Ergebnis sind die in Rede stehenden nichtreaktiven Schmelzklebstoffe somit nicht immer ausreichend wärmebeständig.

In diesem Zusammenhang weisen nichtreaktive Schmelzklebstoffe mitunter auch den Nachteil auf, dass sie mechanisch wenig formbeständig sind und schon bei relativ geringer statischer Belastung und bei höherer Umgebungstemperatur zum Kriechen neigen. Auch von daher weisen nichtreaktive Schmelzklebstoffe bei Anwendungen insbesondere oberhalb der Raumtemperatur einen nur geringen Einsatzbereich auf. Weiterhin sind nichtreaktive Schmelzklebstoffe insbesondere nach ihrer Verarbeitung mitunter chemisch nicht immer im ausreichenden Maße beständig.

Neben den zuvor angeführten nichtreaktiven Schmelzklebstoffen sind im Stand der Technik grundsätzlich auch reaktive Schmelzklebstoffe bekannt, wie sie beispielsweise auf Basis von reaktiven Polyurethanen oder beispielsweise silanmodifizierten Polyolefinen gebildet werden.

Die reaktiven Schmelzklebstoffe zeichnen sich insbesondere dadurch aus, dass sie über chemisch reaktive funktionale Gruppen verfügen, welche insbesondere während und nach der Verarbeitung bzw. Applikation beispielsweise unter Einfluss von Wärme, Strahlung oder Feuchtigkeit zu einer (Nach-)Vernetzung bzw. in Ergänzung zu den physikalischen Klebeeigenschaften auch zur Ausbildung von chemischen Klebeverbindungen führen.

Bei der Verarbeitung bzw. Applikation von reaktiven Schmelzklebstoffen erfolgt nach Auftragung auf zu verklebende Objekte somit neben einer physikalischen Abbindung einhergehend bzw. nachfolgend auch eine weiterführende chemische Reaktion unter Ausbildung hochmolekularer Polymere mit hoher Kohäsion bzw. unter Ausbildung zusätzlicher Klebeverbindungen infolge von chemischen Reaktionen mit der Oberfläche der zu verklebenden Objekte. Auf diese Weise können bei reaktiven Schmelzklebstoffen sehr gute Klebeeigenschaften, hohe Temperaturbeständigkeiten bei gleichzeitig guter Kälteflexibilität sowie hohe Beständigkeiten gegenüber einer Vielzahl von Chemikalien erreicht werden. Reaktive Schmelzklebstoffe weisen somit sowohl die Vorteile der zuvor angeführten schnell abbindenden nichtreaktiven Schmelzklebstoffe als auch die mit der chemischen Vernetzung und Ausbildung chemischer Klebeverbindungen einhergehenden Vorteile auf. Insbesondere weisen reaktive Schmelzklebstoffe, insbesondere bedingt durch die Nachvernetzung sozusagen vorgeschaltete physikalische Aushärtung, gleichermaßen schnelle Verarbeitungsprozesse ohne langwierige Trocknungsphasen auf.

Insbesondere weisen reaktive Schmelzklebstoffe gute Klebeeigenschaften und hohe Temperaturbeständigkeiten insofern auf, als bedingt durch die chemische Nachvernetzung und die Ausbildung chemischer Klebeverbindungen ein entsprechend ausgehärteter reaktiver Schmelzklebstoff durch Hitzeeinwirkung nicht mehr aufgeschmolzen werden kann bzw. die entstandenen Klebeverbindungen nicht durch Erhitzen gelöst werden können.

Reaktive Schmelzklebstoffe sind jedoch auch vor diesem Hintergrund bei ihrer Lagerung und bei ihrer Verarbeitung insbesondere in Schmelzklebepistolen problematisch, da zum einen ein übermäßiger Kontakt beispielsweise mit (Luft-) Feuchtigkeit oder (Umgebungs-)Strahlung zu einem unerwünschten vorzeitigen Abreagieren der chemisch reaktiven Gruppen des Schmelzklebstoffs führt. Zum anderen kann bei der Verarbeitung in Schmelzklebepistolen insbesondere im Bereich der Heiz- bzw. Aufschmelzeinrichtung sowie der Austragseinrichtung, insbesondere Klebedüse, verbleibender und zuvor aufgeschmolzener reaktiver Schmelzklebstoff bei Betriebsunterbrechung bzw. Stillstand (thermisch) irreversibel aushärten und dabei auch mit den Innenflächen der Schmelzklebepistole, welche in Kontakt mit dem reaktiven Schmelzkleber stehen, chemische Klebeverbindungen eingehen, welche auch durch nachfolgendes Erhitzen nicht gelöst werden können, was somit zu einem unerwünschten, auch durch Erwärmung nicht zu beseitigenden Verstopfen der Schmelzklebepistole insgesamt führt.

Die EP 2 330 165 A1 betrifft einen Heißklebestick aus einem Schmelzklebstoff zur Verwendung in einer Heißklebepistole, wobei der Schmelzklebstoff ein reaktiver Schmelzklebstoff ist und wobei jeder Heißklebestick einzeln in einer gegen flüssiges Wasser dichten Umhüllung vorliegt. Zudem kann der Heißklebestick zumindest teilweise ein Reinigungsmaterial aufweisen.

Weiterhin betrifft die US 2004/0108335 A1 ein multifunktionales Kunstmedium (*multi-functional art medium*)*,* welches eine Menge an Schmelzklebstoff (*hot glue*) und eine Wachskreide (*crayon*) sowie ein Behältermittel (*container means*) zur Mischung des Heißklebers und der Wachskreide und zum Erhitzen der Mischung, um den Schmelzklebstoff und die Wachskreide zu einem multifunktionellen Kunstmedium zu vereinigen, aufweist.

Schließlich betrifft die DE 20 2012 103 085 U1 eine Klebstoffstange aus Schmelzklebstoff für die Verarbeitung in einer Klebepistole, wobei der Schmelzklebstoff zumindest bereichsweise mit fluoreszierenden Bestandteilen versehen ist. Dabei ist es insbesondere vorgesehen, dass sich der mit fluoreszierenden Bestandteilen ausgerüstete Bereich über einen Teil des Querschnitts der Klebstoffstange erstreckt.

Somit sind die zuvor beschriebenen reaktiven Schmelzklebstoffe hinsichtlich ihrer Verarbeitungseigenschaften in entsprechenden Schmelzklebstoffauftragsvorrichtungen, wie Schmelzklebepistolen oder dergleichen, nachteilig, da sie nach entsprechender Anwendung der zugrundeliegenden Gerätschaften und nach deren Aushärtung nicht ohne Weiteres aus diesen entfernt werden können.

Im Ergebnis weisen somit reaktive Schmelzklebstoffe nicht immer die gewünschten Lagerungs- und Verarbeitungseigenschaften auf, insbesondere was deren Anwendung in Schmelzklebepistolen anbelangt.

Vor diesem technischen Hintergrund besteht somit eine Aufgabe der vorliegenden Erfindung darin, einen speziellen stangenförmigen Schmelzklebstoffkörper, welcher sich zur Verarbeitung in Schmelzklebepistolen eignet, auf Basis eines reaktiven Schmelzklebstoffs sowie ein Verfahren zur Herstellung des Schmelzklebstoffkörpers nach der Erfindung bereitzustellen, wobei die zuvor geschilderten Nachteile des Standes der Technik insbesondere im Hinblick auf die Verarbeitungseigenschaften von reaktiven Schmelzklebstoffen in Schmelzklebepistolen vermieden oder aber zumindest abgeschwächt werden sollen.

Insbesondere besteht eine weitere Aufgabe der vorliegenden Erfindung darin, einen entsprechenden Schmelzklebstoffkörper auf Basis eines reaktiven Schmelzklebstoffs bereitzustellen, welcher verbesserte anwendungs- bzw. verarbeitungsspezifische Eigenschaften insbesondere im Rahmen der Verwendung in Schmelzklebepistolen aufweist, wobei ein der Verarbeitung nachgeschaltetes irreversibles Verstopfen bzw. Blockieren insbesondere von den reaktiven Schmelzklebstoff im Betriebszustand in fließfähiger Form aufweisenden Bestandteilen der Schmelzklebepistole, wie beispielsweise der Heiz- bzw. Aufschmelzeinrichtung sowie der Austragseinrichtung, insbesondere Klebedüse, verhindert werden soll.

In diesem Zusammenhang besteht eine wiederum weitere Aufgabe der vorliegenden Erfindung darin, weitere technische Maßnahmen bereitzustellen, welche insbesondere bei der Anwendung bzw. Verarbeitung der erfindungsgemäß bereitgestellten Schmelzklebstoffkörper eine sichere anwenderseitige und verarbeitungsspezifische Kontrolle bzw. Verifizierung der erfindungsgemäß zu Zwecken der Vermeidung des irreversiblen Verstopfens bzw. Blockierens von Schmelzklebepistolen bereitgestellten Maßnahmen ermöglicht.

Die der vorliegenden Erfindung zugrundeliegende Aufgabe wird - gemäß einem **ersten** Aspekt der vorliegenden Erfindung - durch einen stangenförmigen Schmelzklebstoffkörper, insbesondere Schmelzklebstoff-Stick, vorzugsweise in zylindrischer Form, gemäß Anspruch 1 gelöst. Weitere, vorteilhafte Ausgestaltungen des erfindungsgemäßen stangenförmigen Schmelzklebstoffkörpers sind Gegenstand der diesbezüglichen Unteransprüche.

Weiterer Gegenstand der vorliegenden Erfindung - gemäß einem **zweiten** Erfindungsaspekt - ist das erfindungsgemäße Verfahren zur Herstellung des Schmelzklebstoffkörpers nach der Erfindung gemäß dem diesbezüglichen Verfahrensanspruch.

Weiterer Gegenstand der vorliegenden Erfindung - gemäß einem **dritten** Erfindungsaspekt - ist in diesem Zusammenhang auch der erfindungsgemäße Schmelzklebstoffkörper, welcher gemäß dem Verfahren nach der Erfindung erhältlich ist, wie in dem entsprechenden unabhängigen Anspruch definiert.

Die vorliegende Erfindung betrifft darüber hinaus - gemäß einem **vierten** Erfindungsaspekt - auch das erfindungsgemäße Kit, welches mindestens eine Schmelzklebstoffaustragsvorrichtung sowie mindestens einen Schmelzklebstoffkörper nach der Erfindung enthält, gemäß dem das Kit betreffenden unabhängigen Anspruch.

Zudem ist weiterer Gegenstand der vorliegenden Erfindung - gemäß einem **fünften** Erfindungsaspekt - die erfindungsgemäße Verpackungseinheit bzw. das Gebinde nach der Erfindung.

Wiederum weiterer Gegenstand der vorliegenden Erfindung - gemäß einem **sechsten** Erfindungsaspekt - ist zudem die Verwendung des Schmelzklebstoffkörpers nach der Erfindung für Füge- bzw. Klebeverfahren bzw. zum Fügen und/oder Verkleben von Gegenständen bzw. Bauteilen gemäß dem diese Verwendung betreffenden unabhängigen Anspruch.

Nochmals weiterer Gegenstand der vorliegenden Erfindung - gemäß einem **siebten** Erfindungsaspekt - ist zudem die erfindungsgemäße Verwendung mindestens einer farbgebenden Komponente bzw. eines Farbstoffs zur Kenntlichmachung bzw. Bereitstellung einer visuellen bzw. optischen Verschiedenheit von dem Schmelzklebstoffkörper nach der Erfindung zugrundeliegenden Abschnitten, wie es in dem diese Verwendung betreffenden unabhängigen Anspruch definiert ist.

Schließlich betrifft die vorliegende Erfindung - gemäß einem **achten** Erfindungsaspekt - das Verfahren zur Kenntlichmachung bzw. Bereitstellung einer visuellen bzw. optischen Verschiedenheit von dem Schmelzklebstoffkörper zugrundeliegenden Abschnitten, wie es in dem das erfindungsgemäße Verfahren gemäß diesen Aspekt betreffenden unabhängigen Anspruch definiert ist.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es hierzu einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d.h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben und erläutert, und zwar auch anhand von bevorzugte Ausführungsformen bzw. Ausführungsbeispiele darstellenden Zeichnungen bzw. Figurendarstellungen.

Gegenstand der vorliegenden Erfindung - gemäß einem **ersten** Aspekt der vorliegenden Erfindung - ist somit ein stangenförmiger Schmelzklebstoffkörper, insbesondere zur Verwendung in Schmelzklebepistolen,
wobei der Schmelzklebstoffkörper mindestens einen ersten, wenigstens einen reaktiven Schmelzklebstoff aufweisenden oder hieraus bestehenden Abschnitt und mindestens einen zweiten, wenigstens ein Reinigungsmittel (Spülmittel) aufweisenden oder hieraus bestehenden Abschnitt aufweist, wobei der reaktive Schmelzklebstoff ausgewählt ist aus der Gruppe von (i) reaktiven, feuchtigkeitsvernetzenden isocyanatgruppenfunktionalisierten und/oder isocyanatgruppenhaltigen Polyurethanen, (ii) reaktiven, feuchtigkeitsvernetzenden silangruppenfunktionalisierten und/oder silangruppenhaltigen Polyolefinen sowie deren Kombinationen,
wobei der zweite Abschnitt und/oder das Reinigungsmittel mindestens ein die chemisch reaktiven Gruppen des reaktiven Schmelzklebstoffs inaktivierendes Additiv enthält, wobei das Additiv eine mit den chemisch reaktiven Gruppen des reaktiven Schmelzklebstoffs reagierende funktionale Gruppe aufweist, wobei das Additiv monofunktional ist, und
wobei der erste Abschnitt und/oder der reaktive Schmelzklebstoff einerseits und der zweite Abschnitt und/oder das Reinigungsmittel andererseits optisch und/oder visuell voneinander verschieden, nämlich farblich voneinander verschieden, ausgebildet sind, wobei der zweite Abschnitt und/oder das Reinigungsmittel farbig ausgebildet ist, wobei das Reinigungsmittel mindestens einen farbgebenden Inhaltsstoff (Farbstoff) aufweist.

Die vorliegende Erfindung zielt somit auf einen speziellen stangenförmigen Schmelzklebstoffkörper bzw. Schmelzklebstoff-Stick ab, welcher vorzugsweise in zylindrischer Form vorliegt und welcher für die Verarbeitung mit bzw. in Schmelzklebstoffpistolen geeignet ist, wobei der stangenförmige Schmelzklebstoffkörper nach der Erfindung mindestens einen reaktiven Schmelzklebstoff in Kombination mit einem von den dem reaktiven Schmelzklebstoff räumlich getrennt vorliegenden Reinigungsmittel aufweist. Erfindungsgemäß handelt es sich somit bei dem stangenförmigen Schmelzklebstoffkörper bzw. Schmelzklebstoff-Stick um ein für die Verarbeitung in Schmelzklebstoffpistolen anwendungsfertiges reaktives Schmelzklebstoffsystem, wobei hierzu insbesondere einkomponentige reaktive Schmelzklebstoffsysteme eingesetzt werden.

Eine Konzeption der vorliegenden Erfindung ist dabei darin zu sehen, dass der erfindungsgemäße stangenförmige Schmelzklebstoffkörper in zweckgerichteter Kombination diskrete bzw. voneinander verschiedene Abschnitte aufweist bzw. von diesen Abschnitten ausgebildet wird, wobei die jeweiligen Abschnitte entweder das in Rede stehende reaktive Schmelzklebstoffsystem (Schmelzklebstoff-Abschnitt) oder ein spezielles Reinigungsmittel, synonym auch als Spülmittel bezeichnet, (Reinigungsmittel-Abschnitt) aufweisen. Dabei sind die zugrundeliegenden Abschnitte, wie nachfolgend noch im Detail ausgeführt optisch bzw. visuell voneinander verschieden bzw. voneinander unterscheidbar ausgebildet.

Im Allgemeinen sind die in Rede stehenden Abschnitte entlang der Längsachse des insbesondere in zylindrischer Form vorliegenden Schmelzklebstoffkörpers nach der Erfindung angeordnet, so dass im Anwendungs- bzw. Benutzungszustands des Schmelzklebstoffkörpers insbesondere in Schmelzklebepistolen die Abschnitte aufeinander abfolgend einer entsprechenden Verarbeitung unterzogen werden, so dass sozusagen im Rahmen der Verarbeitung der zugrundeliegenden Komponenten der reaktive Schmelzklebstoff einerseits und das Reinigungs- bzw. Spülmittel andererseits in Form der jeweiligen Schmelzen nacheinander verarbeitet bzw. ausgetragen werden können. Dabei wird durch die Verarbeitung von Reinigungsmittel-Abschnitten die Schmelzklebepistole, insbesondere die Heiz- bzw. Aufschmelzeinrichtung sowie die Austragseinrichtung, von dem reaktiven Schmelzkleber befreit bzw. gereinigt, was einem dauerhaften Verstopfen der Schmelzklebepistole auch bei langem Stillstand bzw. zwischen den jeweiligen Betriebsabschnitten entgegenwirkt.

Im Rahmen der Anwendung bzw. Verarbeitung des erfindungsgemäßen Schmelzklebstoffkörpers, insbesondere Klebstoff-Sticks, erfolgt somit aufeinander abfolgend entweder eine Austragung des reaktiven Schmelzklebstoffs einerseits oder aber des Reinigungs- bzw. Spülmittels andererseits, so dass bei der Verarbeitung des Schmelzklebstoffkörpers entweder ein Klebevorgang oder ein Spülvorgang vorliegt, wobei der Spülvorgang zu einer entsprechenden Reinigung der Schmelzklebepistole führt. Aufgrund der Unterscheidbarkeit kann dies seitens des Anwenders jederzeit nachvollzogen werden.

In diesem Zusammenhang ist eine zentrale Funktion des erfindungsgemäß eingesetzten Reinigungs- bzw. Spülmittels dahingehend zu sehen, dass bei dessen Aufschmelzen zuvor in der Aufschmelzeinrichtung bzw. der Austragseinrichtung der Schmelzklebepistole vorliegender aufgeschmolzener reaktiver Schmelzklebstoff entfernt und durch das Reinigungsmittel ersetzt wird, welches im Allgemeinen wideraufschmelzbar ist, so dass das Reinigungsmittel zwischen den Betriebsabschnitten bzw. während der Lagerung der Schmelzklebepistole in dieser verbleiben kann. Hierdurch wird erfindungsgemäß gewährleistet, dass die Schmelzklebepistole von nach Vernetzung nicht mehr aufschmelzbaren Schmelzklebstoff befreit wird und somit ihre Einsatz- bzw. Gebrauchsfähigkeit beibehält, insbesondere da ein irreversibles Verstopfen der Vorrichtung verhindert wird.

In diesem Zusammenhang besteht eine zentrale Idee der vorliegenden Erfindung darin, wie zuvor angeführt, dass die Abschnitte des erfindungsgemäßen Schmelzklebstoffkörpers (d. h. Abschnitt mit reaktivem Schmelzklebstoff einerseits und Abschnitt mit Reinigungs- bzw. Spülmittel andererseits) optisch bzw. visuell voneinander verschieden ausgebildet sind, was erfindungsgemäß insbesondere durch eine unterschiedliche Farbgebung der in Rede stehenden Abschnitte gewährleistet werden kann.

Durch die optische bzw. visuelle Differenzierung, welche neben einer unterschiedlichen Farbgebung beispielsweise auch durch eine unterschiedliche Transluzenz oder Opazität bzw. durch unterschiedliche optischen Dichten der in Rede stehenden Abschnitte, vorzugsweise über eine unterschiedliche Farbgebung bzw. Färbung, gewährleistet werden kann, kann unmittelbar seitens des Anwenders beurteilt werden, welches Material (d. h. Schmelzklebstoff einerseits und Reinigungs- bzw. Spülmittel andererseits) aus der Schmelzklebstoffaustragsvorrichtung, insbesondere Schmelzklebepistole, ausgetragen wird, so dass das ausgetragene Material unmittelbar anhand der aus der Vorrichtung abgegebenen Schmelze beurteilt werden kann. Auf dieser Basis können somit seitens des Anwenders gezielt Klebevorgänge von Reinigungs- bzw. Spülvorgängen aufeinander abgestimmt bzw. kontrolliert werden. Somit kann der Anwender die Schmelzklebepistole entsprechend in einen lagerungsfähigen Zustand überführen, wobei Anwender die Schmelzklebepistole jederzeit ohne aufwendige Reinigung erneut eingesetzt werden kann.

Durch die individuelle größen- bzw. volumenmäßige Ausbildung und Anordnung sowie Auswahl der Anzahl der jeweiligen Abschnitte in Form des reaktiven Schmelzklebstoffs einerseits und des Reinigungs- bzw. Spülmittels andererseits können die erfindungsgemäßen Schmelzklebstoffkörper insbesondere vor dem Hintergrund des jeweiligen Anwendungs- bzw. Einsatzzweckes maßgeschneidert bzw. individuell angepasst werden. Dies gilt auch insofern, als erfindungsgemäß, wie nachfolgend noch angeführt, spezielle reaktive Schmelzklebstoffe einerseits und wiederum spezielle Reinigungsmittel andererseits eingesetzt und gezielt kombiniert werden können, um hierdurch die Reinigungs- bzw. Spüleigenschaften beispielsweise im Hinblick auf die chemischen Eigenschaften bzw. die Klebeeigenschaften des eingesetzten Klebstoff individuell abstimmen zu können.

Insgesamt gehen somit mit der erfindungsgemäßen Konzeption zahlreiche Vorteile einher, wie sie nachfolgend nochmals zusammenfassend und ergänzend angeführt sind:
- Durch die Bereitstellung eines Schmelzklebstoffkörpers auf Basis eines reaktiven Schmelzklebstoffs wird erfindungsgemäß ein leistungsfähiges Klebesystem bereitgestellt, bei welchem die Vorteile nichtreaktiver Schmelzklebstoffe insbesondere im Hinblick auf hervorragenden Verarbeitungseigenschaften (z. B. kurze Aushärtezeiten und dergleichen) mit den sehr guten Klebeleistungen reaktiver Schmelzklebstoffsysteme, insbesondere bedingt durch das Nachvernetzen bzw. durch die Ausbildung chemischer Klebeverbindungen, vereint werden.
- Gleichzeitig werden die mit reaktiven Schmelzklebstoffsystemen mitunter einhergehenden Nachteile im Rahmen der vorliegenden Erfindung überkommen: So wird durch die gezielte Kombination des reaktiven Schmelzklebstoffs mit einem Reinigungsmittel dessen Anwendung im Rahmen der Verarbeitung nachhaltig verbessert, insbesondere was das Vermeiden einer mitunter dauerhaften Verstopfung der zugrundeliegenden Auftragsvorrichtungen, insbesondere Schmelzklebstoffpistolen, anbelangt. Im Rahmen der vorliegenden Erfindung ist es somit im Hinblick auf die eingesetzten reaktiven Schmelzklebstoffe völlig überraschend gelungen, die diametralen Eigenschaften im Hinblick auf eine hervorragende Klebeleistung einerseits und verbesserten anwendungstechnischen Aspekten andererseits in ein und demselben Material zu vereinen, wobei die Handhabung durch die optische Unterscheidbarkeit maßgeblich verbessert ist.
- In diesem Zusammenhang wird im Rahmen der vorliegenden Erfindung durch die gezielte Maßnahme, wonach die dem Schmelzklebstoffkörper zugrundeliegenden Abschnitte mit dem reaktiven Schmelzklebstoff einerseits bzw. dem Reinigungsmittel andererseits optisch voneinander verschieden, insbesondere farblich voneinander verschieden, ausgebildet sind, gewährleistet, dass im Rahmen der Verarbeitung jederzeit erkannt werden kann, welches Material aus der Schmelzklebepistole ausgetragen wird.
- Auf dieser Basis ist es somit für den Anwender bzw. Verarbeiter sehr einfach, die eingesetzte Schmelzklebepistole für einen Stillstand vorzubereiten bzw. einzurichten, da nur so lange Masse auszutragen ist, bis das zugrundeliegende Reinigungs- bzw. Spülmittel an der Spitze bzw. Düse der Schmelzklebepistole ausgetragen wird, was visuell bzw. optisch einfach zu erkennen ist. Dementsprechend sind grundsätzlich geringe Mengen an Reinigungsmittel ausreichend, so dass die erfindungsgemäßen Schmelzklebstoffkörper insgesamt über einen hohen Anteil an reaktivem Schmelzklebstoff verfügen können.
- In diesem Zusammenhang entfällt somit auch ein aufwendiges Zerlegen und Reinigen der Pistole oder ein gesondertes Einfüllen von Reinigungs- bzw. Spülmittel, was den Wartungsaufwand nachhaltig reduziert.
- In entsprechender Weise kann die eingesetzte Schmelzklebepistole ohne großen Aufwand in Betrieb genommen werden, da wiederum nur so lange Masse auszutragen ist, bis der reaktive Schmelzklebstoff an der Düse der Schmelzklebepistole ausgetragen wird, was gleichermaßen optisch bzw. visuell unmittelbar zu erkennen ist. Somit kann die Inbetriebnahme und damit der Klebeprozess unmittelbar bei Auftreten des visuell bzw. optisch andersartigen bzw. andersfarbigen reaktiven Schmelzklebstoffs an der Düsenspitze aufgenommen werden, was auch mit einem optimierten Materialverbrauch einhergeht.
- Wie im Nachfolgenden noch detailliert dargestellt, handelt es sich bei dem Reinigungs- bzw. Spülmittel insbesondere um ein nichtreaktives bzw. um ein mit dem reaktiven Schmelzklebstoff kompatibles Material in Form eines Thermoplasten bzw. nichtreaktiven Schmelzklebstoffs, so dass das Reinigungs- bzw. Spülmittel jederzeit wieder aufgeschmolzen werden kann, was zu einer Verhinderung der Verstopfung des der Auftragsvorrichtung bzw. Schmelzklebepistole führt.

Durch die zweckgerichtete Kombination eines insbesondere einkomponentigen reaktiven Schmelzklebstoffs mit einem insbesondere thermoplastischen Reinigungs- bzw. Spülmittel, wie zuvor angeführt, wird somit auf Basis des insbesondere zylindrischen Schmelzklebstoffkörpers nach der Erfindung im Hinblick auf die Verarbeitung mit Schmelzklebstoffpistolen gegenüber dem Stand der Technik eine nachhaltige Verbesserung erreicht.

Wie zuvor angeführt, besteht somit eine zentrale Idee der vorliegenden Erfindung darin, den dem Schmelzklebstoffkörper zugrundeliegenden ersten Abschnitt mit dem reaktiven Schmelzklebstoff bzw. den reaktiven Schmelzklebstoff als solchen sowie den dem erfindungsgemäßen Schmelzklebstoffkörper gleichermaßen zugrundeliegenden zweiten Abschnitt bzw. das Reinigungsmittel als solches optisch voneinander verschieden auszubilden:
In diesem Zusammenhang ist es erfindungsgemäß insbesondere vorgesehen, dass der erste Abschnitt bzw. der reaktive Schmelzklebstoff einerseits und der zweite Abschnitt bzw. das Reinigungsmittel andererseits voneinander verschiedene Farben bzw. voneinander verschiedene Lichtdurchlässigkeiten (Transluzenzen), besonders bevorzugt verschiedene Farben, aufweisen. Hierdurch kann eine exakte optische bzw. visuelle Differenzierung der in Rede stehenden Komponenten insbesondere auch bei deren Austrag im geschmolzenen Zustand aus einer entsprechenden Schmelzklebstoffaustragsvorrichtung, wie einer Schmelzklebepistole, gewährleistet werden. Dementsprechend erhält der Anwender bzw. Verwender jederzeit eine unmittelbare visuelle bzw. optische Information, welches Material aus der Schmelzklebepistole bei Anwendung ausgetragen wird.

Gemäß einer erfindungsgemäßen Ausführungsform kann es in diesem Zusammenhang vorgesehen sein, dass der erste Abschnitt bzw. der reaktive Schmelzklebstoff zumindest im Wesentlichen farblos ausgebildet ist. Diesbezüglich kann der erste Abschnitt bzw. der reaktive Schmelzklebstoff zumindest im Wesentlichen keinen farbgebenden Inhaltsstoff (Farbstoff), insbesondere keinen zusätzlichen farbgebenden Inhaltsstoff, aufweisen.

Erfindungsgemäß ist es zudem vorgesehen, dass der zweite Abschnitt bzw. das Reinigungsmittel farbig ausgebildet ist. Diesbezüglich weist der zweite Abschnitt und/oder das Reinigungsmittel mindestens einen farbgebenden Inhaltsstoff (Farbstoff) auf.

In Bezug auf weiterführende technische Maßnahmen zur Ausgestaltung des ersten Abschnitts bzw. zweiten Abschnitts zur Gewährleistung der erfindungsgemäß vorgesehenen optischen Verschiedenheit kann auch auf die nachfolgenden Ausführungen verwiesen werden.

Erfindungsgemäß ist es insbesondere vorgesehen, dass die optische Verschiedenheit, insbesondere die farbliche Verschiedenheit, im geschmolzenen Zustand, insbesondere in der Schmelze bzw. bei der Anwendung bzw. Verarbeitung, des reaktiven Schmelzklebstoffs einerseits und des Reinigungsmittels andererseits zumindest im Wesentlichen erhalten bleibt. Hierdurch ist eine entsprechende Differenzierung bzw. Beurteilung möglich, welches Material aus der Schmelzklebepistole insbesondere in Form der Schmelze bzw. im fließfähigen Zustand ausgetragen wird.

Im Rahmen der vorliegenden Erfindung ist es in diesem Zusammenhang insbesondere vorgesehen, dass die optische Verschiedenheit, insbesondere die farbliche Verschiedenheit, bei der Anwendung bzw. Verarbeitung des Schmelzklebstoffkörpers vorzugsweise mittels einer Schmelzklebepistole (Heißklebepistole), insbesondere während bzw. anhand des Austrags bzw. der Applikation des reaktiven Schmelzklebstoffs einerseits und des Reinigungsmittels andererseits, insbesondere in Form der jeweiligen Schmelze, vom Anwender wahrnehmbar, insbesondere visuell bzw. optisch wahrnehmbar, ist. Der Anwender bzw. Verarbeiter erhält somit während der Anwendung bzw. Verarbeitung jederzeit eine Information, welches Material konkret aus der Schmelzklebepistole ausgetragen wird, so dass ein direkter Rückschluss möglich ist, ob entsprechend ein Klebevorgang einerseits und oder ein Reinigungsvorgang andererseits durchgeführt wird.

Was die körperliche Ausbildung bzw. die Formgebung des erfindungsgemäßen Schmelzklebstoffkörpers anbelangt, so handelt es sich hierbei insbesondere um einen zylinderförmigen Stick bzw. eine zylinderförmige Stange mit entsprechender Grundfläche und Höhe (d. h. Länge des Schmelzklebstoffkörpers). Insbesondere weisen die insbesondere zylinderförmigen Schmelzklebstoffkörper nach der Erfindung einen zumindest im Wesentlichen (kreis-)runden Querschnitt auf.

Im Allgemeinen sind die den Schmelzklebstoffkörper nach der Erfindung ausbildenden ersten und zweiten Abschnitte entlang der Längsachse des Schmelzklebstoffkörpers nach der Erfindung angeordnet, insbesondere wobei die in Rede stehenden Abschnitte den Schmelzklebstoffkörper nach der Erfindung entsprechend ausbilden.

Erfindungsgemäß ist es insbesondere vorgesehen, dass der erste Abschnitt und der zweite Abschnitt jeweils eine zylindrische Form aufweisen.

Zudem ist es erfindungsgemäß bevorzugt, wenn der erste Abschnitt und der zweite Abschnitt zumindest im Wesentlichen identische Grundflächen bzw. zumindest im Wesentlichen identische Durchmesser aufweisen. Insbesondere sind die jeweiligen Grundflächen form- und/oder flächengleich, insbesondere form- und flächengleich ausgebildet.

Weiterhin ist es erfindungsgemäß insbesondere vorgesehen, dass der erste Abschnitt und der zweite Abschnitt den Schmelzklebstoffkörper nach der Erfindung im Bereich ihrer jeweiligen in dem Schmelzklebstoffkörper vorliegenden Positionierung und/oder Erstreckung ausbilden. In diesem Zusammenhang wird der Schmelzklebstoffkörper nach der Erfindung somit in seiner Gesamtheit entsprechend von der Gesamtanordnung bzw. Gesamtheit der zugrundeliegenden Abschnitte gebildet.

Gemäß einer erfindungsgemäßen Ausführungsform kann es vorgesehen sein, dass der erste Abschnitt ein erstes Ende des Schmelzklebstoffkörpers und der zweite Abschnitt ein zweites Ende des Schmelzklebstoffkörpers bildet. Dementsprechend ist es erfindungsgemäß insbesondere vorgesehen, dass an dem einen Ende des Schmelzklebstoffkörpers ein erster Abschnitt bzw. der reaktive Schmelzklebstoff und an dem anderen Ende ein zweiter Abschnitt bzw. das Reinigungsmittel angeordnet ist. Dementsprechend kann im Rahmen der Anwendung bzw. Verarbeitung beispielsweise zuerst die Verarbeitung des reaktiven Schmelzklebstoffs erfolgen, gefolgt von einem nachgeschalteten Austrag des Reinigungsmittels insbesondere zu Zwecken des Spülens bzw. Reinigens der zugrundeliegenden Schmelzklebepistole. Beispielsweise kann der Schmelzklebstoffkörper nach der Erfindung jeweils genau einen ersten Abschnitt und einen zweiten Abschnitt aufweisen (Anordnung: erster Abschnitt / zweiter Abschnitt; beispielsweise mit einer Längen- bzw. Volumenausbildung: 2/3 erster Abschnitt / 1/3 zweiter Abschnitt).

Erfindungsgemäß kann es jedoch auch vorgesehen sein, dass beide Enden des Schmelzklebstoffkörpers nach der Erfindung jeweils von einem ersten Abschnitt oder aber von einem zweiten Abschnitt, insbesondere jeweils von einem zweiten Abschnitt, gebildet werden. Für die erfindungsgemäße Ausführungsform, wonach beide Enden von einem zweiten Abschnitt bzw. dem Reinigungsmittel gebildet werden, bedeutet dies, dass im Rahmen der Anwendung bzw. Verwendung zunächst ein Spülen bzw. Reinigen der Schmelzklebepistole, gefolgt von einem Austrag des reaktiven Schmelzklebstoffs und wiederum gefolgt von einem abschließenden Reinigen bzw. Spülen der Schmelzklebepistole erfolgt. In diesem Zusammenhang besteht eine vorteilhafte Ausführung der vorliegenden Erfindung insbesondere darin, einen Schmelzklebstoffkörper bereitzustellen, bei welchem beide Enden jeweils von einem zweiten Abschnitt gebildet werden, wobei die zweiten Abschnitte einen ersten Abschnitt beidseitig flankieren (Anordnung: zweiter Abschnitt / erster Abschnitt / zweiter Abschnitt; beispielsweise mit einer Längen- bzw. Volumenausbildung: 1/4 zweiter Abschnitt / 2/4 erster Abschnitt / 1/4 zweiter Abschnitt).

Gemäß einer erfindungsgemäß besonders bevorzugten Ausführungsform sind der erste Abschnitt und der zweite Abschnitt an den jeweils zueinander angeordneten, insbesondere sich gegenüberliegenden Grundflächen, insbesondere Zylindergrundflächen, miteinander verbunden, insbesondere dauerhaft miteinander verbunden bzw. verklebt. Insofern wird erfindungsgemäß ein einstückiger Schmelzklebstoffkörper aus bzw. mit den jeweils verbundenen Abschnitten bereitgestellt.

Zudem sind der erste Abschnitt und der zweite Abschnitt in bevorzugter Weise jeweils entlang der Längsachse des Schmelzklebstoffkörpers angeordnet, und zwar insbesondere derart, dass die Längsachse des ersten Abschnitts und die Längsachse des zweiten Abschnitts auf der Längsachse des durch die jeweiligen Abschnitte gebildeten Schmelzklebstoffkörpers liegen.

Erfindungsgemäß kann es im Allgemeinen vorgesehen sein, dass der Schmelzklebstoffkörper eine identische Anzahl an ersten Abschnitten und an zweiten Abschnitten aufweist. Beispielsweise kann der Schmelzklebstoffkörper einen ersten Abschnitt und einen zweiten Abschnitt oder aber zwei erste Abschnitte und zwei zweite Abschnitte usw. aufweisen.

Im Allgemeinen kann es erfindungsgemäß dabei vorgesehen sein, dass der Schmelzklebstoffkörper mehrere, insbesondere zwei, drei, vier oder mehr, erste Abschnitte und mehrere, insbesondere zwei, drei, vier oder mehr, zweite Abschnitte aufweist.

Im Allgemeinen kann es in diesem Zusammenhang vorgesehen sein, dass der erste Abschnitt bzw. die ersten Abschnitte einerseits und der zweite Abschnitt bzw. die zweiten Abschnitte andererseits alternierend bzw. zueinander abwechselnd entlang der Längsachse des Schmelzklebstoffkörpers angeordnet sind. Dementsprechend erfolgt im Rahmen der Verarbeitung in alternierender Abfolge der Austrag des Schmelzklebstoffs oder des Reinigungsmittels. Durch entsprechende Auswahl der Anzahl der jeweiligen Abschnitte kann somit die Anzahl an Austragsintervallen des reaktiven Schmelzklebstoffs einerseits und des Reinigungsmittels andererseits vorgegeben werden.

Erfindungsgemäß kann es vorgesehen sein, dass der erste Abschnitt und der zweite Abschnitt voneinander verschiedene Längen aufweisen.

In diesem Zusammenhang kann es insbesondere vorgesehen sein, dass der erste Abschnitt eine größere Länge als der zweite Abschnitt aufweist.

Gleichermaßen kann das Längenverhältnis des ersten Abschnitts zum zweiten Abschnitt [Längenverhältnis erster Abschnitt: zweiter Abschnitt] im Bereich von 50 : 1 bis 0,5 : 1, insbesondere im Bereich von 25 : 1 bis 0,75 : 1, vorzugsweise im Bereich von 10 : 1 bis 1 : 1, bevorzugt im Bereich von 5 : 1 bis 1,25 : 1, besonders bevorzugt im Bereich von 4 : 1 bis 1,5 : 1, liegen.

Insbesondere kann das Längenverhältnis des ersten Abschnitts zum zweiten Abschnitt [Längenverhältnis erster Abschnitt : zweiter Abschnitt] mindestens 0,5 : 1, insbesondere mindestens 0,75: 1, vorzugsweise mindestens 1:1, bevorzugt mindestens 1,25 : 1, besonders bevorzugt mindestens 1,5 : 1, betragen.

Zudem kann das Längenverhältnis des ersten Abschnitts zum zweiten Abschnitt [Längenverhältnis erster Abschnitt: zweiter Abschnitt] höchstens 50 : 1, insbesondere höchstens 25:1, vorzugsweise höchstens 10:1, bevorzugt höchstens 5 : 1, besonders bevorzugt höchstens 4 : 1, betragen.

Insbesondere kann es erfindungsgemäß gleichermaßen vorgesehen sein, dass der erste Abschnitt und der zweite Abschnitt voneinander verschiedene Volumen, insbesondere Volumen an reaktivem Schmelzklebstoff einerseits und Reinigungsmittelvolumen andererseits, aufweisen.

Dementsprechend kann es erfindungsgemäß vorgesehen sein, dass das Volumen des ersten Abschnitts, insbesondere Volumen an reaktivem Schmelzklebstoff, größer ist als das Volumen, insbesondere Reinigungsmittelvolumen, des zweiten Abschnitts.

Erfindungsgemäß kann es dabei insbesondere vorgesehen sein, dass das Volumenverhältnis des ersten Abschnitts zum zweiten Abschnitt [Volumenverhältnis erster Abschnitt : zweiter Abschnitt] im Bereich von 50 : 1 bis 0,5 : 1, insbesondere 25 : 1 bis 0,75 : 1, vorzugsweise 10 : 1 bis 1 : 1, bevorzugt 5 : 1 bis 1,25 : 1, besonders bevorzugt 4 : 1 bis 1,5 : 1, liegt.

Entsprechend kann es erfindungsgemäß vorgesehen sein, dass das Volumenverhältnis des ersten Abschnitts zum zweiten Abschnitt [Volumenverhältnis erster Abschnitt: zweiter Abschnitt] mindestens 0,5 : 1, insbesondere mindestens 0,75: 1, vorzugsweise mindestens 1:1, bevorzugt mindestens 1,25 : 1, besonders bevorzugt mindestens 1,5 : 1, beträgt.

Insbesondere kann das Volumenverhältnis des ersten Abschnitts zum zweiten Abschnitt [Volumenverhältnis erster Abschnitt: zweiter Abschnitt] höchstens 50 : 1, insbesondere höchstens 25:1, vorzugsweise höchstens 10:1, bevorzugt höchstens 5 : 1, besonders bevorzugt höchstens 4 : 1, betragen.

Durch die gezielte Auswahl des Längenverhältnisses der ersten bzw. zweiten Abschnitte bzw. des Volumenverhältnisses der in Rede stehenden Abschnitte können die jeweiligen Mengen an auszutragendem bzw. zu applizierendem reaktiven Schmelzklebstoff einerseits und Reinigungsmittel andererseits vorgegeben bzw. eingestellt und aufeinander abgestimmt werden. Dabei ist es erfindungsgemäß insbesondere vorgesehen, dass ein entsprechend größeres Volumen an reaktivem Schmelzklebstoff im Vergleich zu dem Volumen an Reinigungsmittel vorgesehen ist, was den Verarbeitungsschritt des Klebstoffauftrags entsprechend verlängert. Insbesondere sollte die Länge des zweiten Abschnitts bzw. dessen Volumen zur Gewährleistung eines effizienten Spülens bzw. Reinigens der zugrundeliegenden Schmelzklebstoffpistole entsprechend ausgewählt bzw. eingestellt werden, wozu der Fachmann jederzeit in der Lage ist.

Was die Anordnung der Abschnitte weiterhin anbelangt, so kann in Verarbeitungsrichtung des Schmelzklebstoffkörpers, insbesondere bei der Anwendung bzw. Verarbeitung des Schmelzklebstoffkörpers in einer Schmelzklebepistole, der erste Abschnitt stromabwärts zu dem an den ersten Abschnitt angrenzenden zweiten Abschnitt angeordnet sein. Demnach ist in Verarbeitungsrichtung des Schmelzklebstoffkörpers der erste Abschnitt dem angrenzenden zweiten Abschnitt gemäß dieser Ausführungsform sozusagen vorgeschaltet, so dass bei der Verarbeitung zuerst der Klebstoff ausgetragen wird.

Insbesondere kann es vorgesehen sein, dass in Verarbeitungsrichtung des Schmelzklebstoffkörpers, insbesondere bei der Anwendung und/oder Verarbeitung des Schmelzklebstoffkörpers in einer Schmelzklebepistole, der stromabwärts zuerst angeordnete Abschnitt durch den ersten Abschnitt gebildet ist. Hieraus folgt, dass bei der Verarbeitung bzw. Anwendung des erfindungsgemäßen Schmelzklebstoffkörpers in einer Schmelzklebepistole zuerst ein Austrag des reaktiven Schmelzklebstoffs erfolgt, so dass unmittelbar mit dem Verkleben begonnen werden kann. Eine derartige Anordnung ist insbesondere dann von Vorteil, wenn in einem einen Stillstand der Schmelzklebepistole vorausgehenden Betrieb zuletzt eine Spülung bzw. Reinigung vorgenommen wurde.

Gleichermaßen kann es erfindungsgemäß aber auch vorgesehen sein, dass in Verarbeitungsrichtung des Schmelzklebstoffkörpers, insbesondere bei der Anwendung bzw. Verarbeitung des Schmelzklebstoffkörpers in einer Schmelzklebepistole, der stromabwärts zuerst angeordnete Abschnitt durch den zweiten Abschnitt gebildet ist. Dies bedeutet, dass bei der Verarbeitung bzw. Anwendung des Schmelzklebstoffkörpers bzw. bei Inbetriebnahme der Schmelzklebepistole zunächst ein Spülen bzw. Reinigen der Vorrichtung mit dem Reinigungsmittel erfolgt, was zu einer Optimierung des nachfolgenden Austrags bzw. der nachfolgenden Applikation des reaktiven Schmelzklebstoffs führt.

Erfindungsgemäß kann es somit vorgesehen sein, dass in Verarbeitungsrichtung des Schmelzklebstoffkörpers, insbesondere bei der Anwendung und/oder Verarbeitung des Schmelzklebstoffkörpers in einer Schmelzklebepistole, der stromabwärts zuerst angeordnete Abschnitt durch den ersten Abschnitt gebildet ist oder aber dass in Verarbeitungsrichtung des Schmelzklebstoffkörpers, insbesondere bei der Anwendung und/oder Verarbeitung des Schmelzklebstoffkörpers in einer Schmelzklebepistole, der stromabwärts zuerst angeordnete Abschnitt durch den zweiten Abschnitt gebildet ist.

Gemäß einer erfindungsgemäß bevorzugten Ausführungsform ist in Verarbeitungsrichtung des Schmelzklebstoffkörpers, insbesondere bei der Anwendung und/oder Verarbeitung des Schmelzklebstoffkörpers in einer Schmelzklebepistole, der stromabwärts zuletzt angeordnete Abschnitt durch den zweiten Abschnitt gebildet. Demnach erfolgt bei der Verarbeitung bzw. Anwendung des Schmelzklebstoffkörpers nach der Erfindung im Rahmen des jeweiligen Betriebs der Schmelzklebepistole als abschließender Schritt ein Spülen bzw. Reinigen der Schmelzklebepistole, so dass diese entsprechend im gereinigten Zustand stillgelegt werden kann, so dass auch von daher eine unmittelbare Betriebsaufnahme für einen nachfolgenden Verarbeitungszyklus gewährleistet ist.

Die größenmäßige Ausbildung des ersten Abschnitts bzw. des zweiten Abschnitts und somit des erfindungsgemäßen Schmelzklebstoffkörpers kann in weiten Bereichen variieren:
Insbesondere kann der Schmelzklebstoffkörper eine Länge im Bereich von 1 cm bis 100 cm, insbesondere im Bereich von 2 cm bis 80 cm, vorzugsweise im Bereich von 3 cm bis 60 cm, bevorzugt im Bereich von 4 cm bis 40 cm, besonders bevorzugt im Bereich von 5 cm bis 30 cm, aufweisen.

Gleichermaßen kann der Schmelzklebstoffkörper einen Durchmesser im Bereich von 0,1 cm bis 10 cm, insbesondere im Bereich von 0,2 cm bis 5 cm, vorzugsweise im Bereich von 0,4 cm bis 4 cm, bevorzugt im Bereich von 0,5 cm bis 3 cm, besonders bevorzugt im Bereich von 0,6 cm bis 1,5 cm, aufweisen.

Insbesondere kann der Schmelzklebstoffkörper für Schmelzklebstoff-Sticks handelsübliche bzw. genormte Größen aufweisen. In diesem Zusammenhang kann der Schmelzklebstoffkörper bzw. Schmelzklebstoff-Stick nach der Erfindung nach Art einer Klebstoffstange bzw. Klebstoffpatrone zur Anwendung in handelsüblichen Schmelzklebepistolen ausgebildet sein. Hierzu kann der stangenförmige Schmelzklebstoffkörper beispielsweise (handels-)übliche Durchmesser von 7 mm, 11 mm, 12 mm oder 18 mm aufweisen, beispielsweise bei einer Länge des Klebstoffsticks von 5 cm bis 30 cm (z. B. Länge von 30 cm bei einem Durchmesser von 19 mm und Länge von 20 cm bei einem Durchmesser von 12 mm).

Erfindungsgemäß ist es weiterhin bevorzugt, wenn der erste Abschnitt bzw. der zweite Abschnitt jeweils homogen ausgebildet ist, wobei hierunter insbesondere zu verstehen ist, dass die jeweiligen Komponenten gleichmäßig in dem jeweiligen Abschnitt vorliegen bzw. verteilt sind. Dies führt zu einer Vergleichmäßigung bzw. zu einer hohen Güte des jeweiligen Austrags bei der Verarbeitung sowohl des reaktiven Schmelzklebstoffs als auch des Reinigungsmittels.

Was darüber hinaus den erfindungsgemäß eingesetzten reaktiven Schmelzklebstoff anbelangt, so kann es vorgesehen sein, dass der reaktive Schmelzklebstoff ein thermoplastischer und/oder einkomponentiger Schmelzklebstoff ist. Durch die Ausbildung des reaktiven Schmelzklebstoffs als thermoplastischer Schmelzklebstoff wird insbesondere ein definiertes Aufschmelzverhalten im Rahmen der Verarbeitung bzw. Anwendung gewährleistet bzw. ermöglicht. Zudem führt die Ausbildung des reaktiven Schmelzklebstoffs als einkomponentiger Schmelzklebstoff zu anwendungs- bzw. verabeitungsspezifischen Vorteilen.

Im Allgemeinen kann es erfindungsgemäß vorgesehen sein, dass der reaktive Schmelzklebstoff ein feuchtigkeitsvernetzender, wärmevernetzender bzw. strahlenvernetzender Schmelzklebstoff, insbesondere ein feuchtigkeitsvernetzender Schmelzklebstoff, ist. Für die erfindungsgemäße Ausführungsform, wonach der reaktive Schmelzklebstoff ein feuchtigkeitsvernetzender Schmelzklebstoff ist, kann eine im Rahmen der Verarbeitung bzw. Anwendung erfolgende (Nach-)Vernetzung beispielsweise in Gegenwart von Luftfeuchtigkeit erfolgen.

Im Allgemeinen weist der reaktive Schmelzklebstoff chemisch reaktive Gruppen auf. In diesem Zusammenhang können die chemisch reaktiven Gruppen ausgewählt sein aus Isocyanatgruppen, Silangruppen, Epoxidgruppen, Urethangruppen und reaktiven Doppel- oder Mehrfachbindungen (insbesondere C-C-Doppel- oder Mehrfachbindungen) sowie deren Kombinationen, vorzugsweise Isocyanatgruppen und Silangruppen. Insbesondere sind die chemisch reaktiven Gruppen endständig bzw. endständig im molekularen Grundgerüst des reaktiven Schmelzklebstoffs angeordnet. Die in Rede stehenden chemisch reaktiven Gruppen führen im Rahmen der Anwendung bzw. Verwendung des Schmelzklebstoffkörpers nach der Erfindung, ohne sich auf diese Theorie beschränken zu wollen, zu einer definierten Nachvernetzung sowie zur Ausbildung chemischer Klebeverbindungen mit einem zu verklebenden Objekt, was im Ergebnis zu hervorragenden Klebeeigenschaften und zu einer hohen Wärmestabilität des Klebstoffs führt.

Erfindungsgemäß ist es dabei vorgesehen sein, dass der reaktive Schmelzklebstoff ausgewählt ist aus der Gruppe von (i) reaktiven, feuchtigkeitsvernetzenden isocyanatgruppenfunktionalisierten und/oder isocyanatgruppenhaltigen Polyurethanen, bevorzugt isocyanatterminierten Polyurethanen; (ii) reaktiven, feuchtigkeitsvernetzenden silangruppenfunktionalisierten und/oder silangruppenhaltigen Polyolefinen, bevorzugt silangruppengepfropften Polyolefinen; sowie deren Kombinationen, besonders bevorzugt aus der Gruppe von (i) reaktiven, feuchtigkeitsvernetzenden isocyanatgruppenfunktionalisierten und/oder isocyanatgruppenhaltigen Polyurethanen, bevorzugt isocyanatterminierten Polyurethanen, sowie deren Kombinationen.

In diesem Zusammenhang weisen insbesondere die zuvor angeführten reaktiven PUR-Schmelzklebstoffe hohe Temperaturbeständigkeiten und eine hohe Resistenz gegenüber einer Vielzahl von Chemikalien auf, während sich die in Rede stehenden insbesondere silanmodifizierten Polyolefine auch dadurch auszeichnen, dass beispielsweise eine Verklebung auch von unvorbehandelten Polyolefinen, insbesondere Polypropylen, als zu verklebendes Substrat möglich ist.

Im Allgemeinen sollte der reaktive Schmelzklebstoff bei Raumtemperatur (20 °C) und Umgebungsdruck (1.013,25 hPa) im festen Zustand vorliegen. Zudem sollte der reaktive Schmelzklebstoff einen Erweichungspunkt bzw. -bereich, insbesondere bestimmt nach Ring und Kugel, vorzugsweise bestimmt nach DIN EN 1238:2011-07, zwischen 40 °C und 100 °C, insbesondere zwischen 50 °C und 90 °C, vorzugsweise zwischen 55 °C und 80 °C, aufweisen.

In diesem Zusammenhang sollte der reaktive Schmelzklebstoff einen Erweichungspunkt und/oder -bereich, insbesondere bestimmt nach Ring und Kugel, vorzugsweise bestimmt nach DIN EN 1238:2011-07, von mindestens 40 °C, insbesondere mindestens 50 °C, vorzugsweise mindestens 55 °C, vorzugsweise mindestens 60 °C, aufweisen.

Im Rahmen der vorliegenden Erfindung ist es zudem von Vorteil, wenn der reaktive Schmelzklebstoff einen Schmelzpunkt, insbesondere bestimmt mittels Dynamischer Differenzialkalorimetrie (DDK), vorzugsweise bestimmt nach DIN 53765:1994-03, im Bereich von 55 °C bis 275 °C, insbesondere im Bereich von 65 °C bis 225 °C, vorzugsweise im Bereich von 70 °C bis 175 °C, aufweist.

In diesem Zusammenhang kann es gleichermaßen vorgesehen sein, dass der reaktive Schmelzklebstoff eine Verarbeitungstemperatur, insbesondere bestimmt mittels Dynamischer Differenzialkalorimetrie (DDK), vorzugsweise bestimmt nach DIN 53765:1994-03, im Bereich von 80 °C bis 300 °C, insbesondere im Bereich von 90 °C bis 250 °C, vorzugsweise im Bereich von 95 °C bis 200 °C, aufweist.

Gleichermaßen ist es von Vorteil, wenn der reaktive Schmelzklebstoff eine Viskosität, insbesondere dynamische Viskosität und/oder insbesondere bestimmt nach DIN EN ISO 3219:1994-10 und/oder insbesondere im Temperaturbereich von 95 °C bis 200 °C, im Bereich von 5.000 mPas bis 150.000 mPas, insbesondere im Bereich von 7.500 mPas bis 125.000 mPas, vorzugsweise im Bereich von 10.000 mPas bis 100.000 mPas, aufweist.

Zudem sollte der reaktive Schmelzklebstoff eine Dichte ρ, insbesondere bestimmt bei einer Temperatur von 20 °C und/oder insbesondere bestimmt nach DIN 51757:2011-01, im Bereich von 0,5 g/cm³ bis 2,5 g/cm³, insbesondere im Bereich von 0,6 g/cm³ bis 2,3 g/cm³, vorzugsweise im Bereich von 0,7 g/cm³ bis 2,1 g/cm³, bevorzugt im Bereich von 0,8 g/cm³ bis 2 g/cm³, aufweisen.

Die vorgenannten Eigenschaften bzw. Parameter des reaktiven Schmelzklebstoffs führen insbesondere zu anwendungs- bzw. verarbeitungsspezifischen Eigenschaften und Vorteilen, insbesondere was das Schmelzverhalten, die Fließfähigkeit und das Austragsverhalten insbesondere aus einer Schmelzklebepistole anbelangt.

Als reaktiver Schmelzklebstoff kann beispielsweise das von der Jowat SE vertriebene, kommerziell erhältliche Produkt Jowatherm Reaktant 601.60 eingesetzt werden.

Was weiterhin das erfindungsgemäß eingesetzte Reinigungs- bzw. Spülmittel anbelangt, so ist es erfindungsgemäß insbesondere vorgesehen, dass das Reinigungsmittel ein Thermoplast, insbesondere ein nichtreaktiver Thermoplast, bzw. ein nichtreaktiver Schmelzklebstoff, insbesondere ein thermoplastischer nichtreaktiver Schmelzklebstoff, ist. Hieraus folgt, dass das Reinigungsmittel nach erneuter Inbetriebnahme durch Wärmeeinwirkung aus der Schmelzklebepistole durch Aufschmelzen entfernt werden kann.

Insbesondere handelt es sich bei dem Reinigungsmittel um ein zu dem Schmelzklebstoff kompatibles Reinigungsmittel. Der Begriff "kompatibel", wie er im Rahmen der vorliegenden Erfindung verwendet wird, ist insbesondere so zu verstehen, dass das Reinigungsmittel im Hinblick auf den reaktiven Schmelzklebstoff derart ausgebildet bzw. ausgewählt wird, dass ein möglichst effizientes Spülen bzw. Reinigen der zugrundeliegenden Schmelzklebepistole im Rahmen der Anwendung des Schmelzklebstoffkörpers und somit ein effizientes Entfernen des reaktiven Schmelzklebstoffs gewährleistet ist. Dabei bezieht sich der Begriff "kompatibel" insbesondere auch auf entsprechende physikalischchemischen Eigenschaften des Reinigungsmittels, wie sie insbesondere nachfolgend definiert sind:
In diesem Zusammenhang ist es erfindungsgemäß von Vorteil, wenn das Reinigungsmittel ausgewählt ist aus der Gruppe von (i) Ethylenvinylacetaten (EVA-Polymeren); (ii) (Meth-)Acrylaten; (iii) Polyolefinen (PO), insbesondere Polyethylenen (PE), Polypropylenen (PP) und ataktischen Polyolefinen (APAO); (iv) Polyurethanen (PU); (v) Polyamiden (PA); (vi) Polyestern (PES); und deren Kombinationen, besonders bevorzugt aus der Gruppe von (i) Ethylenvinylacetaten (EVA-Polymeren); (ii) (Meth-)Acrylaten; (iii) Polyolefinen (PO); sowie deren Kombinationen.

Gemäß der Erfindung ist es zudem vorgesehen, dass das Reinigungsmittel und/oder der zweite Abschnitt mindestens ein die chemisch reaktiven Gruppen des reaktiven Schmelzklebstoffs inaktivierendes Additiv enthält. Durch die Gegenwart eines derartigen Additivs kann bei der Reinigung bzw. dem Spülen eine entsprechende Inaktivierung der chemisch-reaktiven Gruppen des reaktiven Schmelzklebstoffs realisiert werden, so dass dessen (Nach-)Vernetzung bzw. die Ausbildung von chemischen Klebeverbindungen (z. B. mit den inneren Oberflächen der die Schmelze des reaktiven Schmelzklebstoffs führenden Bestandteile der Schmelzklebepistolen) unterbunden wird. Durch die Gegenwart eines Additivs, wie zuvor definiert, können somit die reaktiven Gruppen des reaktiven Klebstoffs blockiert und somit sozusagen der reaktive Schmelzklebstoff als solcher inaktiviert und in einen nichtreaktiven Schmelzklebstoff überführt werden. Hierdurch kann das Spülen bzw. Reinigen weiterführend verbessert bzw. erleichtert werden. Zudem sind etwaige Verunreinigungen an (zuvor) reaktivem Schmelzklebstoff weniger kritisch, da dieser im inaktiven Zustand durch ein nachträgliches Erwärmen wiederum aufgeschmolzen und aufgetragen werden kann.

In diesem Zusammenhang weist das Additiv eine mit den chemisch reaktiven Gruppen des reaktiven Schmelzklebstoffs reagierende funktionale Gruppe, insbesondere Hydroxygruppe, auf. In diesem Zusammenhang ist das Additiv zudem monofunktional bzw. monofunktionell ausgebildet. Die Ausrüstung des Additivs mit einer Hydroxygruppe kommt beispielsweise bei Verwendung von reaktiven PUR-Schmelzklebstoffen in Betracht, da die zugrundeliegende Hydroxygruppe mit den freien Isocyanatgruppen des PUR-Schmelzklebstoffs zu reagieren imstande ist. Entsprechend kommt grundsätzlich auch die Verwendung von Amingruppen oder Amidgruppen in Abhängigkeit von dem jeweils eingesetzten reaktiven Schmelzklebstoff in Betracht. Der Fachmann ist jederzeit in der Lage, die entsprechenden reaktiven Gruppen des Additivs vor dem Hintergrund des eingesetzten reaktiven Schmelzklebstoffs auszuwählen und hierauf abzustimmen.

Was das Additiv weiterhin anbelangt, so hat es sich als vorteilhaft erwiesen, wenn das Additiv bei einer Temperatur von 20 °C einen Dampfdruck von höchstens 50 Pa, insbesondere höchstens 40 Pa, vorzugsweise höchstens 30 Pa, bevorzugt höchstens 20 Pa, aufweist. Hierdurch wird insbesondere ein vorzeitiges Verdampfen des Additivs insbesondere bei der Verarbeitung unter hohen Temperaturen verhindert. Auch in diesem Zusammenhang sollte das Additiv eine mit dem reaktiven Schmelzklebstoff, insbesondere mit den chemisch reaktiven Gruppen des reaktiven Schmelzklebstoffs, reagierende funktionale Gruppe, insbesondere Hydroxygruppe, aufweisen. Auch in diesem Zusammenhang sollte das Additiv zudem monofunktional bzw. monofunktionell ausgebildet sein.

Weiterhin sollte das Additiv eine organische Verbindung, insbesondere ein Monoalkohol, vorzugsweise ein C₃-C₃₀-Monoalkohol, insbesondere ein C₆-C₃₀-Fettalkohol, und/oder Benzylalkohol, sein.

Insbesondere kann das Reinigungsmittel und/oder der zweite Abschnitt das Additiv in Mengen von höchstens 20 Gew.-%, insbesondere höchstens 15 Gew.-%, vorzugsweise höchstens 10 Gew.-%, bevorzugt höchstens 5 Gew.-%, besonders bevorzugt 2 Gew.-%, bezogen auf das Reinigungsmittel und/oder den zweiten Abschnitt, enthalten. Insbesondere kann das Reinigungsmittel und/oder der zweite Abschnitt das Additiv in Mengen im Bereich von 0,1 Gew.-% bis 20 Gew.-%, insbesondere im Bereich von 0,5 Gew.-% bis 15 Gew.-%, vorzugsweise im Bereich von 0,75 Gew.-% bis 10 Gew.-%, bevorzugt im Bereich von 1 Gew.-% bis 5 Gew.-%, besonders bevorzugt im Bereich von 1,25 Gew.-% bis 2 Gew.-%, bezogen auf das Reinigungsmittel und/oder den zweiten Abschnitt, enthalten.

Darüber hinaus kann das Reinigungsmittel und/oder der zweite Abschnitt mindestens ein Wachs, insbesondere ein natürliches, synthetisches oder chemisch modifiziertes (teilsynthetisches) Wachs, enthalten. In diesem Zusammenhang kann das Reinigungsmittel und/oder der zweite Abschnitt das Wachs in Mengen von höchstens 15 Gew.-%, insbesondere höchstens 10 Gew.-%, vorzugsweise höchstens 5 Gew.-%, bezogen auf das Reinigungsmittel und/oder den zweiten Abschnitt, enthalten. Insbesondere kann das Reinigungsmittel und/oder der zweite Abschnitt das Wachs in Mengen im Bereich von 0,5 Gew.-% bis 15 Gew.-%, insbesondere im Bereich von 1 Gew.-% bis 10 Gew.-%, vorzugsweise im Bereich von 1,5 Gew.-% bis 5 Gew.-%, bezogen auf das Reinigungsmittel und/oder den zweiten Abschnitt, enthalten. Hierdurch kann insbesondere auch die Fließfähigkeit des Reinigungsmittels weiterführend eingestellt werden.

Als Reinigungsmittel kann beispielsweise das von der Jowat SE vertriebene, kommerziell erhältliche Produkt 930.34 eingesetzt werden. Hierbei handelt es sich um eine Formulierung auf Basis von EVA und Wachs, wobei der Formulierung gegebenenfalls ein Monoalkohol als Additiv insbesondere zur Absättigung von Isocyanatgruppen eines als reaktiven Schmelzklebstoff eingesetzten PUR-Schmelzklebstoffs zugegeben werden kann. Dieses Reinigungsmittel kann insbesondere mit dem zuvor angeführten reaktiven Schmelzklebstoff Jowatherm Reaktant 601.60 der Firma Jowat SE in dem erfindungsgemäßen Schmelzklebstoffkörper in Form jeweils separater Abschnitte kombiniert werden.

Zudem ist es erfindungsgemäß von Vorteil, wenn das Reinigungsmittel und der reaktive Schmelzklebstoff (i) zumindest im Wesentlichen gleiche Erweichungspunkte und/oder -bereiche und/oder (ii) zumindest im Wesentlichen gleiche Schmelzpunkte und/oder Verarbeitungstemperaturen und/oder (iii) zumindest im Wesentlichen gleiche Viskositäten und/oder (iv) zumindest im Wesentlichen gleiche Dichten aufweisen.

In diesem Zusammenhang kann das Reinigungsmittel einen um höchstens 20 %, insbesondere höchstens 10 %, vorzugsweise höchstens 5 %, von dem reaktiven Schmelzklebstoff abweichenden Erweichungspunkt und/oder -bereich, bezogen auf den Erweichungspunkt und/oder -bereich des reaktiven Schmelzklebstoffs, und/oder einen um höchstens 20 %, insbesondere höchstens 10 %, vorzugsweise höchstens 5 %, von dem reaktiven Schmelzklebstoff abweichenden Schmelzpunkt bzw. Verarbeitungstemperatur, bezogen auf den Schmelzpunkt bzw. Verarbeitungstemperatur des reaktiven Schmelzklebstoffs, aufweisen. Zudem kann das Reinigungsmittel eine um höchstens 20 %, insbesondere höchstens 10 %, vorzugsweise höchstens 5 %, von dem reaktiven Schmelzklebstoff abweichende Viskosität, bezogen auf die Viskosität des reaktiven Schmelzklebstoffs, aufweisen. Zudem kann das Reinigungsmittel eine um höchstens 50 %, insbesondere höchstens 40 %, vorzugsweise höchstens 30 %, von dem reaktiven Schmelzklebstoff abweichende Dichte, bezogen auf die Dichte des reaktiven Schmelzklebstoffs, aufweisen.

Darüber hinaus sollte das Reinigungsmittel bei Raumtemperatur (20 °C) und Umgebungsdruck (1.013,25 hPa) im festen Zustand vorliegen.

Zudem sollte das Reinigungsmittel einen Erweichungspunkt und/oder -bereich, insbesondere bestimmt nach Ring und Kugel, vorzugsweise bestimmt nach DIN EN 1238:2011-07, zwischen 40 °C und 100 °C, insbesondere zwischen 50 °C und 90 °C, vorzugsweise zwischen 55 °C und 80 °C, aufweisen.

Gleichermaßen sollte das Reinigungsmittel einen Erweichungspunkt und/oder - bereich, insbesondere bestimmt nach Ring und Kugel, vorzugsweise bestimmt nach DIN EN 1238:2011-07, von mindestens 40 °C, insbesondere mindestens 50 °C, vorzugsweise mindestens 55 °C, vorzugsweise mindestens 60 °C, aufweisen.

Weiterhin sollte das Reinigungsmittel einen Schmelzpunkt, insbesondere bestimmt mittels Dynamischer Differenzialkalorimetrie (DDK), vorzugsweise bestimmt nach DIN 53765:1994-03, im Bereich von 55 °C bis 275 °C, insbesondere im Bereich von 65 °C bis 225 °C, vorzugsweise im Bereich von 70 °C bis 175 °C, aufweisen.

Zudem sollte das Reinigungsmittel eine Verarbeitungstemperatur, insbesondere bestimmt mittels Dynamischer Differenzialkalorimetrie (DDK), vorzugsweise bestimmt nach DIN 53765:1994-03, im Bereich von 80 °C bis 300 °C, insbesondere im Bereich von 90 °C bis 250 °C, vorzugsweise im Bereich von 95 °C bis 200 °C, aufweisen.

Zudem sollte das Reinigungsmittel eine Viskosität, insbesondere dynamische Viskosität und/oder insbesondere bestimmt nach DIN EN ISO 3219:1994-10 und/oder im Temperaturbereich von 95 °C bis 200 °C, im Bereich von 5.000 mPas bis 150.000 mPas, insbesondere im Bereich von 7.500 mPas bis 125.000 mPas, vorzugsweise im Bereich von 10.000 mPas bis 100.000 mPas, aufweisen.

Weiterhin sollte das Reinigungsmittel eine Dichte ρ, insbesondere bestimmt bei einer Temperatur von 20 °C und/oder insbesondere bestimmt nach DIN 51757:2011-01, im Bereich von 0,5 g/cm³ bis 2,5 g/cm³, insbesondere im Bereich von 0,6 g/cm³ bis 2,3 g/cm³, vorzugsweise im Bereich von 0,7 g/cm³ bis 2,1 g/cm³, bevorzugt im Bereich von 0,8 g/cm³ bis 2 g/cm³, aufweisen.

Erfindungsgemäß ist es zudem vorgesehen, dass der zweite Abschnitt bzw. das Reinigungsmittel, mindestens eine farbgebende Komponente bzw. mindestens einen Farbstoff aufweist. In diesem Zusammenhang kann es erfindungsgemäß vorgesehen sein, dass die farbgebende Komponente und/oder der Farbstoff ein Pigmentfarbstoff, insbesondere ein organischer oder anorganischer Pigmentfarbstoff, ist.

Erfindungsgemäß kann es aber auch vorgesehen sein, dass der zweite Abschnitt bzw. das Reinigungsmittel und der erste Abschnitt bzw. der reaktive Schmelzklebstoff jeweils mindestens eine farbgebende Komponente und/oder mindestens einen Farbstoff aufweisen, wobei die farbgebende Komponente und/oder der Farbstoff des zweiten Abschnitts bzw. des Reinigungsmittels einerseits und die farbgebende Komponente und/oder der Farbstoff des ersten Abschnitts bzw. des reaktiven Schmelzklebstoffs andererseits visuell und/oder optisch unterscheidbar sind, insbesondere wobei die farbgebende Komponenten und/oder die Farbstoffe Pigmentfarbstoffe, insbesondere organische oder anorganische Pigmentfarbstoffe, sind.

Erfindungsgemäß kann es aber auch vorgesehen sein, dass nur der zweite Abschnitt bzw. nur das Reinigungsmittel mindestens eine farbgebende Komponente bzw. mindestens einen Farbstoff aufweist. Auch in diesem Zusammenhang sollte die farbgebende Komponente bzw. der Farbstoff ein Pigmentfarbstoff, insbesondere ein organischer oder anorganischer Pigmentfarbstoff, sein.

Erfindungsgemäß ist der zugrundeliegende Farbstoff bzw. die farbgebende Komponente insbesondere derart auszuwählen, dass dieser bzw. diese auch im Rahmen der Anwendung bzw. Verarbeitung des Schmelzklebstoffkörpers chemisch stabil, insbesondere thermisch stabil, ist und bei Anwendung nicht zerfällt, so dass die zugrundeliegende optische bzw. visuelle Verschiedenheit auch bei entsprechender Anwendung bzw. Verarbeitung bzw. beim Vorliegen der Komponenten in Form einer Schmelze, wahrnehmbar bzw. optisch bzw. visuell erfassbar bleibt.

In diesem Zusammenhang kann es erfindungsgemäß beispielsweise und in nicht beschränkender Weise vorgesehen sein, dass die farbgebende Komponente bzw. der Farbstoff ein anorganischer Pigmentfarbstoff, insbesondere ausgewählt aus der Gruppe von Eisenoxid, Titandioxid, Chromoxid sowie deren Mischungen, insbesondere Eisenoxid und Titandioxid, ist.

Zudem kann die farbgebende Komponente bzw. der Farbstoff ein organischer Pigmentfarbstoff, insbesondere ausgewählt aus der Gruppe von Azopigmenten, insbesondere Monoazo-, Diazo-, Naphtol-, Benzimidazolon- und Metallkomplexpigmenten; polyzyklischen Pigmenten, insbesondere Phthalocyaninpigmenten; Benzimidazolonen sowie deren Mischungen, sein.

Die Menge bzw. Konzentration an farbgebender Komponente bzw. Farbstoff kann dabei in Bezug auf die jeweiligen Abschnitte in weiten Bereichen variieren:
Erfindungsgemäß werden jedoch besonders gute Ergebnisse erhalten, wenn der erste Abschnitt und/oder der reaktive Schmelzklebstoff einerseits oder der zweite Abschnitt und/oder das Reinigungsmittel andererseits die farbgebende Komponente und/oder den Farbstoff, unabhängig voneinander, in Mengen im Bereich von 0,01 Gew.-% bis 10 Gew.-%, insbesondere im Bereich von 0,05 Gew.-% bis 5 Gew.-%, vorzugsweise im Bereich von 0,1 Gew.-% bis 4 Gew.-%, bevorzugt im Bereich von 0,5 Gew.-% bis 3 Gew.-%, bezogen auf den jeweiligen Abschnitt bzw. den reaktiven Schmelzklebstoff oder das Reinigungsmittel, enthalten.

Insbesondere kann der zweite Abschnitt und/oder das Reinigungsmittel die farbgebende Komponente bzw. den Farbstoff in Mengen im Bereich von 0,01 Gew.-% bis 10 Gew.-%, insbesondere im Bereich von 0,05 Gew.-% bis 5 Gew.-%, vorzugsweise im Bereich von 0,1 Gew.-% bis 4 Gew.-%, bevorzugt im Bereich von 0,5 Gew.-% bis 3 Gew.-%, bezogen auf den zweiten Abschnitt und/oder das Reinigungsmittel, enthalten.

Im Rahmen der vorliegenden Erfindung haben sich insbesondere die nachfolgenden Kombinationen von reaktivem Schmelzklebstoff einerseits und Reinigungsmittel andererseits bewährt:
- So kann es erfindungsgemäß vorgesehen sein, dass der reaktive Schmelzklebstoff ein reaktives, feuchtigkeitsvernetzendes isocyanatgruppenfunktionalisiertes und/oder isocyanatgruppenhaltiges Polyurethan, bevorzugt isocyanatterminiertes Polyurethan, umfasst bzw. hieraus besteht und das Reinigungsmittel ein nichtreaktives Ethylenvinylacetat (EVA-Polymer) umfasst oder hieraus besteht. In diesem Zusammenhang kann das Reinigungsmittel mindestens ein eine Hydroxygruppe aufweisendes Additiv, insbesondere wie zuvor definiert, enthalten.
- Zudem kann der reaktive Schmelzklebstoff ein reaktives, feuchtigkeitsvernetzendes silangruppenfunktionalisiertes und/oder silangruppenhaltiges Polyolefin, bevorzugt silangruppengepfropftes Polyolefin, umfassen oder hieraus bestehen und das Reinigungsmittel ein nichtreaktives Polyolefin (PO) umfassen oder hieraus bestehen. In diesem Zusammenhang enthält das Reinigungsmittel mindestens ein mit dem reaktiven Schmelzklebstoff, insbesondere mit den chemisch reaktiven Gruppen des reaktiven Schmelzklebstoffs, reagierendes und/oder die chemisch reaktiven Gruppen des reaktiven Schmelzklebstoffs inaktivierendes Additiv.

Was den erfindungsgemäßen Schmelzklebstoffkörper weiterhin anbelangt, so kann dieser erhältlich sein durch Zusammenfügen, insbesondere dauerhaftes Verbinden, mindestens eines ersten Abschnitts und mindestens eines zweiten Abschnitts, wobei die jeweiligen Abschnitte nach ihrer Herstellung an ihren sich gegenüberliegenden Flächen, insbesondere Grundflächen, dauerhaft miteinander verbunden, insbesondere verklebt sind, vorzugsweise durch Anschmelzen mindestens einer der sich gegenüberliegenden Flächen, insbesondere Grundflächen.

Im Rahmen der vorliegenden Erfindung kann es weiterhin vorgesehen sein, dass der Schmelzklebstoffkörper in einer insbesondere zumindest im Wesentlichen luft- bzw. feuchtigkeitsundurchlässigen Umverpackung bzw. Umhüllung eingebracht ist bzw. vorliegt. Gleichermaßen kann der Schmelzklebstoffkörper mindestens eine insbesondere zumindest im Wesentlichen luft- und/oder feuchtigkeitsundurchlässige Beschichtung, insbesondere auf Wachsbasis, aufweisen. Hierdurch werden die Lagerungseigenschaften bzw. -zeiten des Schmelzklebstoffkörpers nach der Erfindung vergrößert, da insbesondere ein vorzeitiges Abreagieren der chemisch reaktiven Gruppen insbesondere des reaktiven Schmelzklebstoffs verhindert wird.

Wie zuvor angeführt, wird im Rahmen der vorliegenden Erfindung insgesamt ein leistungsfähiger Schmelzklebstoffkörper mit hervorragenden Anwendungs- bzw. Verarbeitungseigenschaften sowohl im Hinblick auf die zugrundeliegende Klebeleistung als auch die Handhabung im Rahmen des Einsatzes in einer Schmelzklebepistole bereitgestellt.

Weiterer Gegenstand der vorliegenden Erfindung - gemäß einem **zweiten** Erfindungsaspekt - ist das Verfahren zur Herstellung des Schmelzklebstoffkörpers nach der Erfindung, insbesondere Schmelzklebstoff-Sticks, wie zuvor definiert, wobei mindestens ein erster, mindestens einen reaktiven Schmelzklebstoff aufweisender oder hieraus bestehender Abschnitt und mindestens ein zweiter, mindestens ein Reinigungsmittel aufweisender oder hieraus bestehender Abschnitt zunächst separat und/oder unabhängig voneinander und/oder getrennt voneinander hergestellt werden und nach deren Herstellung an ihren sich gegenüberliegenden Flächen, insbesondere Grundflächen, zusammengefügt, insbesondere dauerhaft miteinander verbunden, vorzugsweise verklebt werden.

Die Herstellung der zugrundeliegenden Abschnitte des erfindungsgemäßen Schmelzklebstoffkörpers kann dabei in dem Fachmann an sich bekannter Art und Weise erfolgen, beispielsweise unter Verwendung eines Extruders oder einer Zahnradpumpe. Beispielsweise können die in Rede stehenden Abschnitte zunächst als Endlosstränge bzw. Endlos-Sticks hergestellt werden, welche dann insbesondere automatisiert in die entsprechenden Längen der zugrundeliegenden Abschnitte geschnitten werden.

Erfindungsgemäß kann das Zusammenfügen der in Rede stehenden Abschnitte zum Erhalt des erfindungsgemäßen Schmelzklebstoffkörpers beispielsweise durch An- bzw. Aufschmelzen mindestens einer der sich gegenüberliegenden Flächen, insbesondere Grundflächen, des ersten Abschnitts bzw. des zweiten Abschnitts erfolgen.

Durch die erfindungsgemäße Vorgehensweise wird insgesamt ein stabiler Verbund der Abschnitte zur Ausbildung des erfindungsgemäßen Schmelzklebstoffkörpers gewährleistet, wobei zudem ein diskreter bzw. (trenn-)scharfer Übergang bzw. eine (trenn-)scharfe Verbindung der jeweiligen Abschnitte vorliegt, was mit entsprechend anwendungstechnischen Vorteilen sowie verbesserten Lagerungseigenschaften des erfindungsgemäßen Schmelzklebstoffkörper einhergeht.

Weiterer Gegenstand der vorliegenden Erfindung ist in diesem Zusammenhang - gemäß einem **dritten** Erfindungsaspekt - auch der erfindungsgemäße Schmelzklebstoffkörper, insbesondere Schmelzklebstoff-Stick, welcher durch das zuvor beschriebene Verfahren gemäß der vorliegenden Erfindung erhältlich ist.

Im Zusammenhang mit der Erfindung kann eine Schmelzklebstoffaustragsvorrichtung, insbesondere Schmelz- und/oder Heißklebepistole, bevorzugt zum Aufschmelzen und/oder Austragen und/oder Applizieren von reaktivem Schmelzklebstoff, vorzugsweise für die Verarbeitung und/oder Anwendung von Schmelzklebstoffkörpern, insbesondere Schmelzklebstoff-Sticks, wobei die Schmelzklebstoffaustragsvorrichtung mindestens einen Schmelzklebstoffkörper, wie zuvor definiert, aufweist, verwendet werden.

In diesem Zusammenhang kann die Schmelzklebstoffaustragsvorrichtung mindestens eine Aufnahmeeinrichtung für den Schmelzklebstoffkörper und/oder mindestens eine Transporteinrichtung für den Schmelzklebstoffkörper und/oder mindestens eine Aufschmelzeinrichtung für den Schmelzklebstoffkörper und/oder mindestens eine Austrags- und/oder Applikationseinrichtung, vorzugsweise eine Klebedüse, insbesondere für den aufgeschmolzenen Schmelzklebstoff und/oder für das aufgeschmolzene Reinigungsmittel des Schmelzklebstoffkörpers aufweisen. Dabei können insbesondere die Aufschmelzeinrichtung einerseits und die Austrags- und/oder Applikationseinrichtung andererseits eine konstruktive Einheit ausbilden bzw. als gemeinsames Bauteil vorliegen.

Nochmals weiterer Gegenstand der vorliegenden Erfindung - gemäß einem **vierten** Aspekt der vorliegenden Erfindung - ist zudem das erfindungsgemäße Kit, insbesondere Kit zum Aufschmelzen und/oder Austragen und/oder Applizieren von reaktivem Schmelzklebstoff, vorzugsweise für die Verarbeitung und/oder Anwendung von Schmelzklebstoffkörpern, insbesondere Schmelzklebstoff-Sticks, wobei das Kit mindestens eine Schmelzklebstoffaustragsvorrichtung, insbesondere Schmelz- und/oder Heißklebepistole, und mindestens einen Schmelzklebstoffkörper, insbesondere Schmelzklebstoff-Stick, wie zuvor definiert, vorzugsweise eine Mehrzahl an Schmelzklebstoffkörpern, aufweist.

Zudem ist weiterer Gegenstand der vorliegenden Erfindung - gemäß einem **fünften** Erfindungsaspekt - die erfindungsgemäße Verpackungseinheit bzw. das Gebinde nach der Erfindung, umfassend mindestens einen Schmelzklebstoffkörper, insbesondere Schmelzklebstoff-Stick, wie zuvor definiert, insbesondere wobei der Schmelzklebstoffkörper in einer insbesondere zumindest im Wesentlichen luft- und/oder feuchtigkeitsundurchlässigen Umverpackung eingebracht ist und/oder vorliegt.

Darüber hinaus ist weiterer Gegenstand der vorliegenden Erfindung - gemäß einem **sechsten** Erfindungsaspekt - die Verwendung mindestens eines Schmelzklebstoffkörpers, vorzugsweise Schmelzklebstoff-Sticks, wie zuvor definiert, für Füge- und/oder Klebeverfahren und/oder zum Fügen und/oder Verkleben von Gegenständen und/oder Bauteilen und/oder Substraten.

Zudem ist Gegenstand der vorliegenden Erfindung - gemäß einem **siebten** Erfindungsaspekt - die Verwendung mindestens eines Farbstoffs zur Kenntlichmachung und/oder Bereitstellung einer visuellen und/oder optischen Verschiedenheit, nämlich farblichen Verschiedenheit, mindestens eines ersten Abschnitts einerseits und mindestens eines zweiten Abschnitts andererseits eines Schmelzklebstoffkörpers, wobei der erste Abschnitt einen reaktiven Schmelzklebstoff und der zweite Abschnitt mindestens ein Reinigungsmittel aufweist, wobei der reaktive Schmelzklebstoff ausgewählt ist aus der Gruppe von (i) reaktiven, feuchtigkeitsvernetzenden isocyanatgruppenfunktionalisierten und/oder isocyanatgruppenhaltigen Polyurethanen, (ii) reaktiven, feuchtigkeitsvernetzenden silangruppenfunktionalisierten und/oder silangruppenhaltigen Polyolefinen sowie deren Kombinationen,
wobei der zweite Abschnitt und/oder das Reinigungsmittel mindestens ein die chemisch reaktiven Gruppen des reaktiven Schmelzklebstoffs inaktivierendes Additiv enthält, wobei das Additiv eine mit den chemisch reaktiven Gruppen des reaktiven Schmelzklebstoffs reagierende funktionale Gruppe aufweist, wobei das Additiv monofunktional ist,
insbesondere bei der Anwendung und/oder Verarbeitung des Schmelzklebstoffkörpers vorzugsweise mittels einer Schmelzklebepistole, insbesondere bei dem Austrag und/oder der Applikation des reaktiven Schmelzklebstoffs einerseits und des Reinigungsmittels andererseits, insbesondere in Form der jeweiligen Schmelze,
wobei der erste Abschnitt und/oder der reaktive Schmelzklebstoff einerseits und der zweite Abschnitt und/oder das Reinigungsmittel andererseits optisch voneinander verschieden, nämlich farblich voneinander verschieden, ausgebildet werden, wobei ein Farbstoff in den zweiten Abschnitt und/oder in das Reinigungsmittel inkorporiert wird.

Schließlich betrifft die vorliegende Erfindung - gemäß einem **achten** Erfindungsaspekt - das erfindungsgemäße Verfahren zur Kenntlichmachung und/oder Bereitstellung einer visuellen und/oder optischen Verschiedenheit, nämlich farblichen Verschiedenheit, mindestens eines ersten Abschnitts einerseits und mindestens eines zweiten Abschnitts andererseits eines Schmelzklebstoffkörpers, wobei der erste Abschnitt einen reaktiven Schmelzklebstoff und der zweite Abschnitt mindestens ein Reinigungsmittels aufweist, wobei der reaktive Schmelzklebstoff ausgewählt ist aus der Gruppe von (i) reaktiven, feuchtigkeitsvernetzenden isocyanatgruppenfunktionalisierten und/oder isocyanatgruppenhaltigen Polyurethanen, (ii) reaktiven, feuchtigkeitsvernetzenden silangruppenfunktionalisierten und/oder silangruppenhaltigen Polyolefinen sowie deren Kombinationen,
wobei der zweite Abschnitt und/oder das Reinigungsmittel mindestens ein die chemisch reaktiven Gruppen des reaktiven Schmelzklebstoffs inaktivierendes Additiv enthält, wobei das Additiv eine mit den chemisch reaktiven Gruppen des reaktiven Schmelzklebstoffs reagierende funktionale Gruppe aufweist, wobei das Additiv monofunktional ist,
insbesondere bei der Anwendung und/oder Verarbeitung des Schmelzklebstoffkörpers vorzugsweise mittels einer Schmelzklebepistole, insbesondere bei dem Austrag und/oder der Applikation des reaktiven Schmelzklebstoffs einerseits und des Reinigungsmittels andererseits, insbesondere in Form der jeweiligen Schmelze,
wobei der erste Abschnitt und/oder der reaktive Schmelzklebstoff einerseits und der zweite Abschnitt und/oder das Reinigungsmittel andererseits optisch voneinander verschieden, nämlich farblich voneinander verschieden, ausgebildet werden,
wobei mindestens ein Farbstoff in den zweiten Abschnitt und/oder in das Reinigungsmittel inkorporiert wird.

Im Folgenden wird die vorliegende Erfindung anhand bevorzugter Ausführungsbeispiele darstellenden Zeichnungen bzw. Figurendarstellungen näher erläutert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften und Aspekte und Merkmale der vorliegenden Erfindung beschrieben.

In den Figurendarstellungen zeigt
- Fig. 1A: eine schematische Draufsicht auf einen erfindungsgemäßen Schmelzklebstoffkörper mit zylindrischer Form, welcher in Form eines Schmelzklebstoff-Sticks vorliegt;
- Fig. 1B: eine schematische Draufsicht auf einen erfindungsgemäßen Schmelzklebstoffkörper gemäß einer weiteren Ausführungsform der vorliegenden Erfindung;
- Fig. 1C: eine schematische Draufsicht auf einen Schmelzklebstoffkörper nach der Erfindung gemäß einer wiederum weiteren Ausführungsform der vorliegenden Erfindung;
- Fig. 1D: eine schematische Draufsicht auf einen erfindungsgemäßen Schmelzklebstoffkörper gemäß einer nochmals weiterführenden Ausführungsform der vorliegenden Erfindung;
- Fig. 2A: eine schematische Darstellung der erfindungsgemäßen Verfahrensführung zur Bereitstellung eines Schmelzklebstoffkörpers nach der Erfindung;
- Fig. 2B: eine schematische Darstellung der erfindungsgemäßen Verfahrensführung zur Bereitstellung eines erfindungsgemäßen Schmelzklebstoffkörpers gemäß einer weiteren Ausführungsform der vorliegenden Erfindung;
- Fig. 3: eine schematische Darstellung einer Schmelzklebstoffaustragsvorrichtung, welche insbesondere in Form einer Schmelzklebepistole mit eingesetztem Schmelzklebstoffkörper nach der Erfindung vorliegt, wobei
- Fig. 3A: einen ersten Betriebs- bzw. Anwendungszustand der Schmelzklebstoffaustragsvorrichtung mit dem Austrag des Schmelzklebstoffs und
- Fig.3B: einen weiteren Betriebs- bzw. Anwendungszustand der Schmelzklebstoffaustragsvorrichtung mit dem Austrag des Reinigungsmittels.

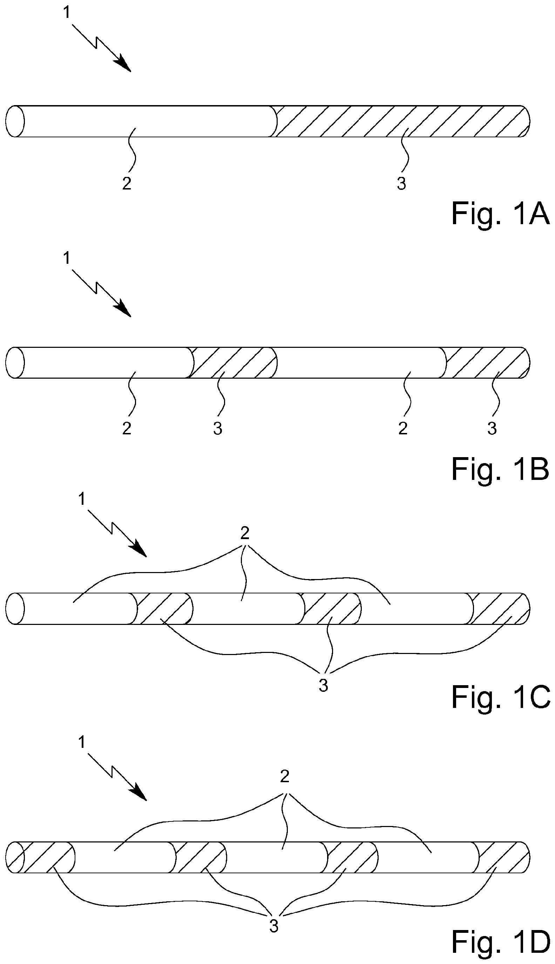

Fig. 1A, 1B, 1C und 1D zeigen somit den erfindungsgemäßen stangenförmigen Schmelzklebstoffkörper 1, welcher insbesondere in Form eines Schmelzklebstoff-Sticks bzw. einer Schmelzklebstoffstange vorliegt und welcher insbesondere eine zylindrische Form aufweist, so dass diesbezüglich eine entsprechende Eignung zur Verwendung in Schmelzklebepistolen vorliegt. Die in Rede stehenden Figuren zeigen zudem, dass der stangenförmige Schmelzklebstoffkörper 1 nach der Erfindung mindestens einen ersten, wenigstens einen reaktiven Schmelzklebstoff aufweisenden Abschnitt 2 und mindestens einen zweiten, wenigstens ein Reinigungsmittel (Spülmittel) aufweisen Abschnitt 3 aufweist. Die in Rede stehenden Figuren verdeutlichen zudem, dass der erste Abschnitt 2 bzw. der reaktive Schmelzklebstoff einerseits und der zweite Abschnitt 3 bzw. das Reinigungsmittel andererseits optisch voneinander verschieden, insbesondere farblich voneinander verschieden ausgebildet sind.

In diesem Zusammenhang zeigt Fig. 1A einen erfindungsgemäßen Schmelzklebstoffkörper 1 mit jeweils einem ersten Abschnitt 2 und einem hiervon visuell bzw. optisch, insbesondere farblich, verschiedenartig ausgebildeten zweiten Abschnitt 3. Gemäß Fig. 1B wird wiederum ein erfindungsgemäßer Schmelzklebstoffkörper 1 dargestellt, welcher insgesamt über zwei erste Abschnitte 2 und zwei zweite Abschnitte 3 verfügt, wobei die in Rede stehenden Abschnitte 2, 3 in alternierender Abfolge zueinander in dem Schmelzklebstoffkörper 1 nach der Erfindung angeordnet sind. In diesem Zusammenhang verdeutlicht Fig. 1C eine weitere Ausführungsform der vorliegenden Erfindung mit jeweils drei ersten Abschnitten 2 und zwei zweiten Abschnitten 3, welche gleichermaßen alternierend in dem Schmelzklebstoffkörper 1 nach der Erfindung angeordnet sind.

Diesbezüglich werden die in Rede stehenden Schmelzklebstoffkörper 1 nach der Erfindung, wie sie in Fig. 1A bis 1C dargestellt sind, insbesondere derart im Rahmen ihrer Verwendung bzw. Anwendung insbesondere in einer Schmelzklebepistole eingesetzt, dass zunächst ein erster Abschnitt 2 mit dem reaktiven Schmelzklebstoff aufgeschmolzen und verarbeitet wird, gefolgt von der Verarbeitung bzw. dem Spülen bzw. Reinigen auf Basis des zweiten Abschnitts 3 mit dem Reinigungs- bzw. Spülmittel, wobei abschließend jeweils ein zweiter Abschnitt 3 auf Basis des Reinigungsmittels zu Zwecken der Reinigung bzw. des der Spülung der zugrundeliegenden Schmelzklebepistole verarbeitet wird.

Fig. 1D zeigt eine weitere erfindungsgemäße Ausführungsform des erfindungsgemäßen Schmelzklebstoffkörpers 1, wobei beide Enden des Schmelzklebstoffkörpers 1 von einem zweiten Abschnitt 3 gebildet werden. Demnach erfolgt im Rahmen der Verarbeitung bzw. Anwendung des erfindungsgemäßen Schmelzklebstoffkörpers 1 zunächst die Verarbeitung eines ersten zweiten Abschnitts 3 und somit des Reinigungsmittels und abschließend die Verarbeitung eines weiteren zweiten Abschnitts 3, so dass die zugrundeliegende Schmelzklebepistole sowohl zu Betriebsbeginn als auch zum Betriebsende mit dem Reinigungsmittel gespült bzw. gereinigt wird.

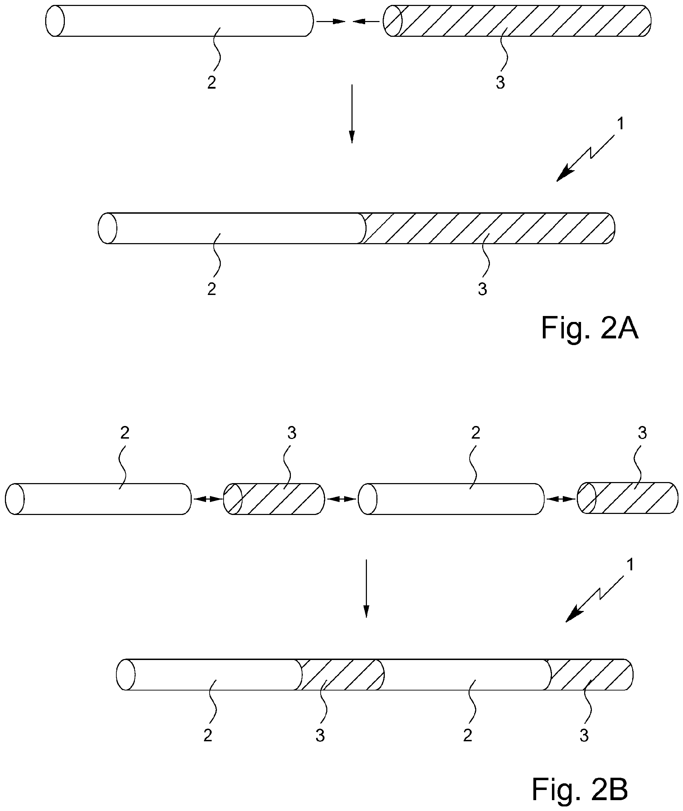

Was das erfindungsgemäße Verfahren anbelangt, so zeigen Fig. 2A und Fig. 2B die erfindungsgemäße Vorgehensweise, wonach zunächst die jeweiligen ersten Abschnitte 2 und die zweiten Abschnitte 3 hergestellt werden bzw. separat vorliegen und die zugrundeliegenden Abschnitte 2, 3 nach deren Herstellung in der gewünschten Reihenfolge an den jeweiligen Grundflächen der zugrundeliegenden zylindrischen Form bzw. Körper der jeweiligen Abschnitte 2, 3 aneinander gefügt bzw. miteinander verbunden werden. Hierdurch kann eine hohe Variabilität im Hinblick auf die konkrete Ausbildung des Schmelzklebstoffkörpers 1 nach der Erfindung mit einem spezifischen Zweck vor dem Hintergrund der jeweiligen Anwendung angepassten Abfolge und Größe der in Rede stehenden Abschnitte bereitgestellt werden.

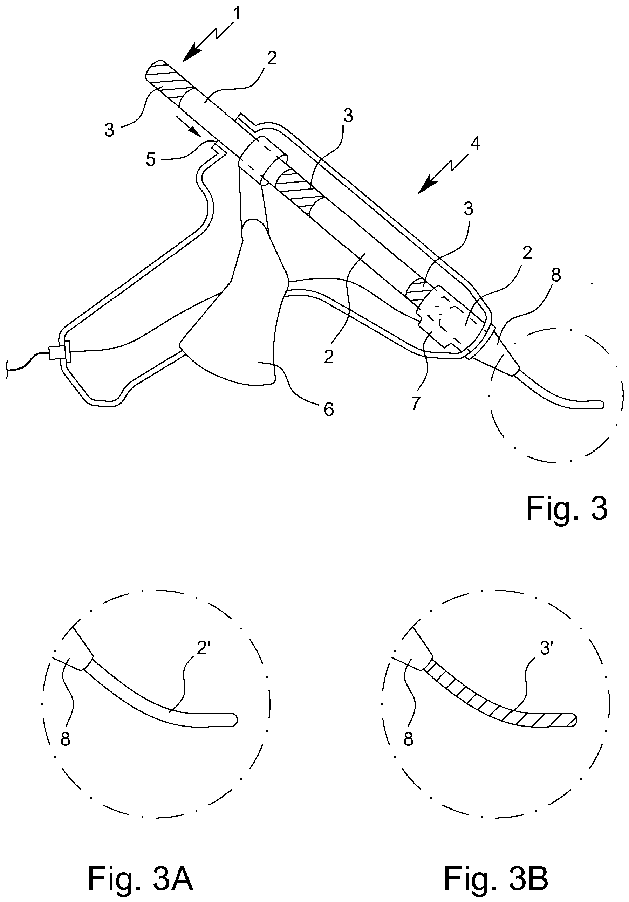

Schließlich zeigt Fig. 3 eine Schmelzklebstoffaustragsvorrichtung 4 mit eingesetztem Schmelzklebstoffkörper 1 nach der Erfindung, wobei die Schmelzklebstoffaustragsvorrichtung 4 in Form einer Schmelzklebepistole ausgebildet ist. Die Schmelzklebstoffaustragsvorrichtung 4 bzw. Schmelzklebepistole nach der Erfindung weist dabei eine Aufnahmevorrichtung 5 für den Schmelzklebstoffkörper 1 sowie eine Transporteinrichtung 6 für den Schmelzklebstoffkörper 1 und eine Aufschmelzeinrichtung 7 für den Schmelzklebstoffkörper auf. Zudem weist die Schmelzklebstoffaustragsvorrichtung eine Austrags- bzw. Applikationseinrichtung 8 insbesondere für den aufgeschmolzenen Schmelzklebstoff bzw. für das aufgeschmolzene Reinigungsmittel des Schmelzklebstoffkörpers auf. In diesem Zusammenhang zeigt Fig. 3A den Betriebs- bzw. Anwendungszustand, wonach geschmolzener bzw. in den fließfähigen Zustand überführter reaktiver Schmelzklebstoff 2' (ausgehend von dem ersten Abschnitt 2) aus der Austrags- bzw. Applikationseinrichtung 8, insbesondere Austragsdüse, ausgetragen bzw. appliziert wird. Fig. 3B zeigt wiederum den Betriebs- bzw. Anwendungszustand des Reinigens bzw. Spülens der Schmelzklebstoffaustragsvorrichtung 4 mit dem optisch bzw. visuell von dem reaktiven Schmelzklebstoff 2' unterscheidbaren Reinigungsmittel 3', welches gleichermaßen im geschmolzenen bzw. fließfähigen Zustand über die Austrags- bzw. Applikationseinrichtung 8 ausgetragen wird.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

### Bezugszeichenliste:

- 1: stangenförmiger Schmelzklebstoffkörper, insbesondere Schmelzklebstoff-Stick (Schmelzklebstoffstange), vorzugweise in zylindrischer Form
- 2: erster Abschnitt bzw. reaktiver Schmelzklebstoff
- 2': reaktiver Schmelzklebstoff im geschmolzenen bzw. fließfähigen Zustand bzw. ausgetragener reaktiver Schmelzklebstoff
- 3: zweiter Abschnitt bzw. Reinigungsmittel (Spülmittel)
- 3': geschmolzenes bzw. fließfähiges Reinigungsmittel bzw. ausgetragenes Reinigungsmittel
- 4: Schmelzklebstoffaustragsvorrichtung, insbesondere Schmelzklebepistole
- 5: Aufnahmeeinrichtung für Schmelzklebstoffkörper
- 6: Transporteinrichtung für Schmelzklebstoffkörper
- 7: Aufschmelzeinrichtung für Schmelzklebstoffkörper
- 8: Austrags- bzw. Applikationseinrichtung

## Patentansprüche

1. Stangenförmiger Schmelzklebstoffkörper, insbesondere zur Verwendung in Schmelzklebepistolen,
wobei der Schmelzklebstoffkörper mindestens einen ersten, wenigstens einen reaktiven Schmelzklebstoff aufweisenden oder hieraus bestehenden Abschnitt und mindestens einen zweiten, wenigstens ein Reinigungsmittel (Spülmittel) aufweisenden oder hieraus bestehenden Abschnitt aufweist, wobei der reaktive Schmelzklebstoff ausgewählt ist aus der Gruppe von (i) reaktiven, feuchtigkeitsvernetzenden isocyanatgruppenfunktionalisierten und/oder isocyanatgruppenhaltigen Polyurethanen, (ii) reaktiven, feuchtigkeitsvernetzenden silangruppenfunktionalisierten und/oder silangruppenhaltigen Polyolefinen sowie deren Kombinationen,
wobei der zweite Abschnitt und/oder das Reinigungsmittel mindestens ein die chemisch reaktiven Gruppen des reaktiven Schmelzklebstoffs inaktivierendes Additiv enthält, wobei das Additiv eine mit den chemisch reaktiven Gruppen des reaktiven Schmelzklebstoffs reagierende funktionale Gruppe aufweist, wobei das Additiv monofunktional ist, und
wobei der erste Abschnitt und/oder der reaktive Schmelzklebstoff einerseits und der zweite Abschnitt und/oder das Reinigungsmittel andererseits optisch und/oder visuell voneinander verschieden, nämlich farblich voneinander verschieden, ausgebildet sind, wobei der zweite Abschnitt und/oder das Reinigungsmittel farbig ausgebildet ist, wobei das Reinigungsmittel mindestens einen farbgebenden Inhaltsstoff (Farbstoff) aufweist.

2. Schmelzklebstoffkörper nach Anspruch 1,
wobei der erste Abschnitt und/oder der reaktive Schmelzklebstoff zumindest im Wesentlichen farblos ausgebildet ist, insbesondere wobei der erste Abschnitt und/oder der reaktive Schmelzklebstoff zumindest im Wesentlichen keinen farbgebenden Inhaltsstoff (Farbstoff), insbesondere keinen zusätzlichen farbgebenden Inhaltsstoff, aufweist.

3. Schmelzklebstoffkörper nach Anspruch 1 oder 2,
wobei der erste Abschnitt und der zweite Abschnitt jeweils entlang der Längsachse des Schmelzklebstoffkörpers angeordnet sind derart, dass die Längsachse des ersten Abschnitts und die Längsachse des zweiten Abschnitts auf der Längsachse des durch die jeweiligen Abschnitte gebildeten Schmelzklebstoffkörpers liegen.

4. Schmelzklebstoffkörper nach Anspruch 1 oder 2,
wobei der reaktive Schmelzklebstoff ein thermoplastischer und/oder einkomponentiger Schmelzklebstoff ist.

5. Schmelzklebstoffkörper nach einem der vorangehenden Ansprüche,
wobei das Reinigungsmittel ein Thermoplast, insbesondere ein nichtreaktiver Thermoplast, und/oder ein nichtreaktiver Schmelzklebstoff, insbesondere ein thermoplastischer nichtreaktiver Schmelzklebstoff, und/oder ein zu dem Schmelzklebstoff kompatibles Reinigungsmittel ist.

6. Schmelzklebstoffkörper nach einem der vorangehenden Ansprüche,
wobei das Additiv eine organische Verbindung, insbesondere ein Monoalkohol, vorzugsweise ein C₃-C₃₀-Monoalkohol, insbesondere ein C₆-C₃₀-Fettalkohol, und/oder Benzylalkohol, ist.

7. Schmelzklebstoffkörper nach einem der vorangehenden Ansprüche,
wobei der Farbstoff ein anorganischer Pigmentfarbstoff, insbesondere ausgewählt aus der Gruppe von Eisenoxid, Titandioxid, Chromoxid sowie deren Mischungen, insbesondere Eisenoxid und Titandioxid, ist; und/oder
wobei der Farbstoff ein organischer Pigmentfarbstoff, insbesondere ausgewählt aus der Gruppe von Azopigmenten, insbesondere Monoazo-, Diazo-, Naphtol-, Benzimidazolon- und Metallkomplexpigmenten; polyzyklischen Pigmenten, insbesondere Phthalocyaninpigmenten; Benzimidazolonen sowie deren Mischungen, ist.

8. Verfahren zur Herstellung eines Schmelzklebstoffkörpers, wie in einem der Ansprüche 1 bis 7 definiert, wobei mindestens ein erster, mindestens einen reaktiven Schmelzklebstoff aufweisender oder hieraus bestehender Abschnitt und mindestens ein zweiter, mindestens ein Reinigungsmittel aufweisender oder hieraus bestehender Abschnitt zunächst separat und/oder unabhängig voneinander und/oder getrennt voneinander hergestellt werden und nach deren Herstellung an ihren sich gegenüberliegenden Flächen, insbesondere Grundflächen, zusammengefügt, insbesondere dauerhaft miteinander verbunden, vorzugsweise verklebt werden.

9. Stangenförmiger Schmelzklebstoffkörper, vorzugsweise in zylindrischer Form, insbesondere zur Verwendung in Schmelzklebepistolen, erhältlich durch ein Verfahren nach Anspruch 8.

10. Kit, insbesondere Kit zum Aufschmelzen und/oder Austragen und/oder Applizieren von reaktivem Schmelzklebstoff, vorzugsweise für die Verarbeitung und/oder Anwendung von Schmelzklebstoffkörpern, wobei das Kit mindestens eine Schmelzklebstoffaustragsvorrichtung, insbesondere Schmelz- und/oder Heißklebepistole und mindestens einen Schmelzklebstoffkörper, wie in einem der Ansprüche 1 bis 7 definiert, vorzugsweise eine Mehrzahl an Schmelzklebstoffkörpern, aufweist.

11. Verpackungseinheit und/oder Gebinde, umfassend mindestens einen Schmelzklebstoffkörper, wie in einem der Ansprüche 1 bis 7 definiert, insbesondere wobei der Schmelzklebstoffkörper in einer insbesondere zumindest im Wesentlichen luft- und/oder feuchtigkeitsundurchlässigen Umverpackung eingebracht ist und/oder vorliegt.

12. Verwendung mindestens eines Schmelzklebstoffkörpers, wie in einem der Ansprüche 1 bis 7 definiert, für Füge- und/oder Klebeverfahren und/oder zum Fügen und/oder Verkleben von Gegenständen und/oder Bauteilen und/oder Substraten.

13. Verwendung mindestens eines Farbstoffs zur Kenntlichmachung und/oder Bereitstellung einer visuellen und/oder optischen Verschiedenheit, nämlich farblichen Verschiedenheit, mindestens eines ersten Abschnitts einerseits und mindestens eines zweiten Abschnitts andererseits eines Schmelzklebstoffkörpers, wobei der erste Abschnitt einen reaktiven Schmelzklebstoff und der zweite Abschnitt mindestens ein Reinigungsmittel aufweist, wobei der reaktive Schmelzklebstoff ausgewählt ist aus der Gruppe von (i) reaktiven, feuchtigkeitsvernetzenden isocyanatgruppenfunktionalisierten und/oder isocyanatgruppenhaltigen Polyurethanen, (ii) reaktiven, feuchtigkeitsvernetzenden silangruppenfunktionalisierten und/oder silangruppenhaltigen Polyolefinen sowie deren Kombinationen,
wobei der zweite Abschnitt und/oder das Reinigungsmittel mindestens ein die chemisch reaktiven Gruppen des reaktiven Schmelzklebstoffs inaktivierendes Additiv enthält, wobei das Additiv eine mit den chemisch reaktiven Gruppen des reaktiven Schmelzklebstoffs reagierende funktionale Gruppe aufweist, wobei das Additiv monofunktional ist,
insbesondere bei der Anwendung und/oder Verarbeitung des Schmelzklebstoffkörpers vorzugsweise mittels einer Schmelzklebepistole, insbesondere bei dem Austrag und/oder der Applikation des reaktiven Schmelzklebstoffs einerseits und des Reinigungsmittels andererseits, insbesondere in Form der jeweiligen Schmelze,
wobei der erste Abschnitt und/oder der reaktive Schmelzklebstoff einerseits und der zweite Abschnitt und/oder das Reinigungsmittel andererseits optisch voneinander verschieden, nämlich farblich voneinander verschieden, ausgebildet werden, wobei ein Farbstoff in den zweiten Abschnitt und/oder in das Reinigungsmittel inkorporiert wird.

14. Verfahren zur Kenntlichmachung und/oder Bereitstellung einer visuellen und/oder optischen Verschiedenheit, nämlich farblichen Verschiedenheit, mindestens eines ersten Abschnitts einerseits und mindestens eines zweiten Abschnitts andererseits eines Schmelzklebstoffkörpers, wobei der erste Abschnitt einen reaktiven Schmelzklebstoff und der zweite Abschnitt mindestens ein Reinigungsmittels aufweist, wobei der reaktive Schmelzklebstoff ausgewählt ist aus der Gruppe von (i) reaktiven, feuchtigkeitsvernetzenden isocyanatgruppenfunktionalisierten und/oder isocyanatgruppenhaltigen Polyurethanen, (ii) reaktiven, feuchtigkeitsvernetzenden silangruppenfunktionalisierten und/oder silangruppenhaltigen Polyolefinen sowie deren Kombinationen,
wobei der zweite Abschnitt und/oder das Reinigungsmittel mindestens ein die chemisch reaktiven Gruppen des reaktiven Schmelzklebstoffs inaktivierendes Additiv enthält, wobei das Additiv eine mit den chemisch reaktiven Gruppen des reaktiven Schmelzklebstoffs reagierende funktionale Gruppe aufweist, wobei das Additiv monofunktional ist,
insbesondere bei der Anwendung und/oder Verarbeitung des Schmelzklebstoffkörpers vorzugsweise mittels einer Schmelzklebepistole, insbesondere bei dem Austrag und/oder der Applikation des reaktiven Schmelzklebstoffs einerseits und des Reinigungsmittels andererseits, insbesondere in Form der jeweiligen Schmelze,
wobei der erste Abschnitt und/oder der reaktive Schmelzklebstoff einerseits und der zweite Abschnitt und/oder das Reinigungsmittel andererseits optisch voneinander verschieden, nämlich farblich voneinander verschieden, ausgebildet werden,
wobei mindestens ein Farbstoff in den zweiten Abschnitt und/oder in das Reinigungsmittel inkorporiert wird.

## Claims

1. Rod-shaped hotmelt adhesive body, in particular for use in hotmelt glue guns,
wherein the hot melt adhesive body has at least a first section comprising or consisting of at least one reactive hot melt adhesive and at least a second section comprising or consisting of at least one cleaning agent (rinsing agent), wherein the reactive hot melt adhesive is selected from the group of (i) reactive, moisture-crosslinking isocyanate group-functionalized and/or isocyanate group-containing polyurethanes, (ii) reactive, moisture-crosslinking silane group-functionalized and/or silane group-containing polyolefins, and combinations thereof,
wherein the second section and/or the cleaning agent contains at least one additive inactivating the chemically reactive groups of the reactive hot melt adhesive, said additive having a functional group reacting with the chemically reactive groups of the reactive hot melt adhesive, wherein the additive is monofunctional, and
wherein the first section and/or the reactive hotmelt adhesive on the one hand and the second section and/or the cleaning agent on the other hand are formed optically and/or visually different from each other, namely different in color from each other, wherein the second section and/or the cleaning agent is formed colored, wherein the cleaning agent comprises at least one color-imparting ingredient (dye).

2. Hot melt adhesive body according to claim 1,
wherein the first section and/or the reactive hot-melt adhesive is formed at least substantially colorless, in particular wherein the first section and/or the reactive hot-melt adhesive has at least substantially no color-imparting ingredient (dye), in particular no additional color-imparting ingredient.

3. Hot melt adhesive body according to claim 1 or 2,
wherein the first section and the second section are each arranged along the longitudinal axis of the hot melt adhesive body such that the longitudinal axis of the first section and the longitudinal axis of the second section lie on the longitudinal axis of the hot melt adhesive body formed by the respective sections.

4. Hot melt adhesive body according to claim 1 or 2,
wherein the reactive hot melt adhesive is a thermoplastic and/or single component hot melt adhesive.

5. Hot melt adhesive body according to any one of the preceding claims,
wherein the cleaning agent is a thermoplastic, in particular a non-reactive thermoplastic, and/or a non-reactive hot melt adhesive, in particular a thermoplastic non-reactive hot melt adhesive, and/or a cleaning agent compatible with the hot melt adhesive.

6. Hot melt adhesive body according to any one of the preceding claims,
wherein the additive is an organic compound, in particular a monoalcohol, preferably a C₃-C₃₀-monoalcohol, in particular a C₆-C₃₀-fatty alcohol, and/or benzyl alcohol.

7. Hot melt adhesive body according to any of the preceding claims,
wherein the dye is an inorganic pigment dye, in particular selected from the group of iron oxide, titanium dioxide, chromium oxide and mixtures thereof, in particular iron oxide and titanium dioxide; and/or
wherein the dye is an organic pigment dye, in particular selected from the group of azo pigments, in particular monoazo, diazo, naphthol, benzimidazolone and metal complex pigments; polycyclic pigments, in particular phthalocyanine pigments; benzimidazolones and mixtures thereof.

8. Method for the production of a hot-melt adhesive body as defined in any one of claims 1 to 7, wherein at least one first section comprising or consisting of at least one reactive hot-melt adhesive and at least one second section comprising or consisting of at least one cleaning agent are initially produced separately and/or independently of one another and/or separately from one another and, after their production, are joined together, in particular permanently bonded to one another, preferably adhesively bonded, on their opposing surfaces, in particular base surfaces.

9. Rod-shaped hot-melt adhesive body, preferably in cylindrical form, in particular for use in hot-melt adhesive guns, obtainable by a process according to claim 8.

10. Kit, in particular a kit for melting and/or discharging and/or applying reactive hot-melt adhesive, preferably for the processing and/or application of hot-melt adhesive bodies, wherein the kit comprises at least one hot-melt adhesive discharging device, in particular a hot-melt and/or hot-adhesive gun, and at least one hot-melt adhesive body as defined in any one of claims 1 to 7, preferably a plurality of hot-melt adhesive bodies.

11. Packaging unit and/or container comprising at least one hot-melt adhesive body as defined in one of claims 1 to 7, in particular wherein the hot-melt adhesive body is introduced and/or present in an outer packaging which is in particular at least substantially impermeable to air and/or moisture.

12. Use of at least one hot-melt adhesive body as defined in any one of claims 1 to 7 for joining and/or bonding processes and/or for joining and/or bonding articles and/or components and/or substrates.

13. Use of at least one colorant to identify and/or provide visual and/or optical dissimilarity, namely color dissimilarity, of at least a first section on the one hand and at least a second section on the other hand of a hot melt adhesive body, wherein the first section comprises a reactive hot melt adhesive and the second section comprises at least one cleaning agent, wherein the reactive hot melt adhesive is selected from the group of (i) reactive, moisture-crosslinking isocyanate group-functionalized and/or isocyanate group-containing polyurethanes, (ii) reactive, moisture-crosslinking silane group-functionalized and/or silane group-containing polyolefins, and combinations thereof,
wherein the second section and/or the cleaning agent contains at least one additive inactivating the chemically reactive groups of the reactive hot melt adhesive, the additive having a functional group reacting with the chemically reactive groups of the reactive hot melt adhesive, wherein the additive is monofunctional,
in particular during the application and/or processing of the hotmelt adhesive body preferably by means of a hotmelt adhesive gun, in particular during the discharge and/or application of the reactive hotmelt adhesive on the one hand and the cleaning agent on the other hand, in particular in the form of the respective melt,
wherein the first section and/or the reactive hotmelt adhesive on the one hand and the second section and/or the cleaning agent on the other hand are formed optically different from each other, namely different in color from each other, wherein a dye is incorporated into the second section and/or into the cleaning agent.

14. A method of identifying and/or providing visual and/or optical dissimilarity, namely color dissimilarity, of at least a first section on the one hand and at least a second section on the other hand of a hot melt adhesive body, wherein the first section comprises a reactive hot melt adhesive and the second section comprises at least one cleaning agent, wherein the reactive hot melt adhesive is selected from the group of (i) reactive, moisture-crosslinking isocyanate group-functionalized and/or isocyanate group-containing polyurethanes, (ii) reactive, moisture-crosslinking silane group-functionalized and/or silane group-containing polyolefins, and combinations thereof,
wherein the second section and/or the cleaning agent contains at least one additive inactivating the chemically reactive groups of the reactive hot melt adhesive, the additive having a functional group reacting with the chemically reactive groups of the reactive hot melt adhesive, wherein the additive is monofunctional,
in particular during the application and/or processing of the hotmelt adhesive body preferably by means of a hotmelt adhesive gun, in particular during the discharge and/or application of the reactive hotmelt adhesive on the one hand and the cleaning agent on the other hand, in particular in the form of the respective melt,
wherein the first section and/or the reactive hotmelt adhesive on the one hand and the second section and/or the cleaning agent on the other hand are formed optically different from each other, namely different in color,
wherein at least one dye is incorporated into the second section and/or into the cleaning agent.

## Revendications

1. Corps de colle thermofusible en forme de barre, en particulier pour l'utilisation dans des pistolets à colle thermofusible,
dans lequel le corps d'adhésif thermofusible présente au moins une première section comprenant ou constituée d'au moins un adhésif thermofusible réactif et au moins une deuxième section comprenant ou constituée d'au moins un agent de nettoyage (agent de rinçage), dans lequel l'adhésif thermofusible réactif est choisi dans le groupe de (i) polyuréthanes réactifs, réticulant à l'humidité, fonctionnalisés par des groupes isocyanate et/ou contenant des groupes isocyanate, (ii) polyoléfines réactives, réticulant à l'humidité, fonctionnalisées par des groupes silane et/ou contenant des groupes silane, ainsi que leurs combinaisons,
la deuxième section et/ou le détergent contenant au moins un additif inactivant les groupes chimiquement réactifs de l'adhésif thermofusible réactif, l'additif présentant un groupe fonctionnel réagissant avec les groupes chimiquement réactifs de l'adhésif thermofusible réactif, l'additif étant monofonctionnel, et
la première section et/ou la colle thermofusible réactive d'une part et la deuxième section et/ou le produit de nettoyage d'autre part étant réalisés de manière optique et/ou visuellement différente l'un de l'autre, à savoir de couleur différente l'un de l'autre, la deuxième section et/ou le produit de nettoyage étant réalisés en couleur, le produit de nettoyage présentant au moins un ingrédient colorant (colorant).

2. Corps de colle thermofusible selon la revendication 1,
dans lequel la première section et/ou la colle thermofusible réactive est réalisée au moins essentiellement de manière incolore, en particulier dans lequel la première section et/ou la colle thermofusible réactive ne présente au moins essentiellement aucun ingrédient colorant (colorant), en particulier aucun ingrédient colorant supplémentaire.

3. Corps de colle thermofusible selon la revendication 1 ou 2,
dans lequel la première section et la deuxième section sont chacune disposées le long de l'axe longitudinal du corps d'adhésif thermofusible de telle sorte que l'axe longitudinal de la première section et l'axe longitudinal de la deuxième section se trouvent sur l'axe longitudinal du corps d'adhésif thermofusible formé par les sections respectives.

4. Corps adhésifs thermofusibles selon la revendication 1 ou 2,
l'adhésif thermofusible réactif étant un adhésif thermofusible thermoplastique et/ou à un seul composant.

5. Corps de colle fusible selon l'une des revendications précédentes,
l'agent de nettoyage étant un thermoplastique, en particulier un thermoplastique non réactif, et/ou un adhésif fusible non réactif, en particulier un adhésif fusible thermoplastique non réactif, et/ou un agent de nettoyage compatible avec l'adhésif fusible.

6. Corps de colle fusible selon l'une des revendications précédentes,
dans lequel l'additif est un composé organique, en particulier un monoalcool, de préférence un monoalcool C₃-C₃₀, en particulier un alcool gras C₆-C₃₀, et/ou un alcool benzylique.

7. Corps adhésif thermofusible selon l'une quelconque des revendications précédentes,
le colorant étant un colorant pigmentaire inorganique, en particulier choisi dans le groupe constitué par l'oxyde de fer, le dioxyde de titane, l'oxyde de chrome ainsi que leurs mélanges, en particulier l'oxyde de fer et le dioxyde de titane; et/ou
le colorant étant un colorant pigmentaire organique, en particulier choisi dans le groupe des pigments azoïques, en particulier des pigments monoazoïques, diazoïques, naphtoliques, benzimidazoloniques et de complexes métalliques; des pigments polycycliques, en particulier des pigments de phtalocyanine; des benzimidazolones ainsi que leurs mélanges.

8. Procédé de fabrication d'un corps de colle thermofusible, tel que défini dans l'une des revendications 1 à 7, dans lequel au moins une première section présentant au moins une colle thermofusible réactive ou constituée de celle-ci et au moins une deuxième section présentant au moins un agent de nettoyage ou constituée de celle-ci sont d'abord fabriquées séparément et/ou indépendamment l'une de l'autre et/ou séparément l'une de l'autre et, après leur fabrication, sont assemblées sur leurs surfaces, en particulier leurs surfaces de base, qui se font face, en particulier sont reliées entre elles de manière durable, de préférence collées.

9. Corps de colle thermofusible en forme de barre, de préférence de forme cylindrique, en particulier pour l'utilisation dans des pistolets à colle thermofusible, pouvant être obtenu par un procédé selon la revendication 8.

10. Kit, en particulier kit pour fondre et/ou distribuer et/ou appliquer de la colle thermofusible réactive, de préférence pour le traitement et/ou l'application de corps de colle thermofusible, ledit kit comprenant au moins un dispositif de distribution de colle thermofusible, en particulier un pistolet à colle thermofusible et/ou à colle chaude et au moins un corps de colle thermofusible tel que défini dans l'une quelconque des revendications 1 à 7, de préférence une pluralité de corps de colle thermofusible.

11. Unité de conditionnement et/ou bidon comprenant au moins un corps de colle fusible tel que défini dans l'une des revendications 1 à 7, en particulier dans lequel le corps de colle fusible est introduit et/ou présent dans un suremballage notamment au moins sensiblement imperméable à l'air et/ou à l'humidité.

12. Utilisation d'au moins un corps de colle fusible, tel que défini dans l'une des revendications 1 à 7, pour des procédés d'assemblage et/ou de collage et/ou pour l'assemblage et/ou le collage d'objets et/ou de composants et/ou de substrats.

13. Utilisation d'au moins un colorant pour identifier et/ou fournir une différence visuelle et/ou optique, à savoir une différence de couleur, d'au moins une première section d'une part et d'au moins une deuxième section d'autre part d'un corps de colle thermofusible, la première section comprenant une colle thermofusible réactive et la deuxième section comprenant au moins un agent nettoyant, la colle thermofusible réactive étant choisie dans le groupe des (i) polyuréthanes réactifs, réticulant à l'humidité, fonctionnalisés par des groupes isocyanate et/ou contenant des groupes isocyanate, (ii) polyoléfines réactives, réticulant à l'humidité, fonctionnalisées par des groupes silane et/ou contenant des groupes silane, ainsi que leurs combinaisons,
la deuxième section et/ou le détergent contenant au moins un additif inactivant les groupes chimiquement réactifs de l'adhésif thermofusible réactif, l'additif présentant un groupe fonctionnel réagissant avec les groupes chimiquement réactifs de l'adhésif thermofusible réactif, l'additif étant monofonctionnel,
en particulier lors de l'application et/ou du traitement du corps de colle thermofusible, de préférence au moyen d'un pistolet à colle thermofusible, en particulier lors de la décharge et/ou de l'application de la colle thermofusible réactive d'une part et de l'agent de nettoyage d'autre part, en particulier sous la forme de la masse fondue respective,
la première section et/ou la colle thermofusible réactive d'une part et la deuxième section et/ou le produit de nettoyage d'autre part étant formés de manière optiquement différente l'un de l'autre, à savoir de couleur différente l'un de l'autre, un colorant étant incorporé dans la deuxième section et/ou dans le produit de nettoyage.

14. Procédé pour identifier et/ou fournir une différence visuelle et/ou optique, à savoir une différence de couleur, d'au moins une première section d'une part et d'au moins une deuxième section d'autre part d'un corps de colle thermofusible, la première section comprenant une colle thermofusible réactive et la deuxième section comprenant au moins un agent de nettoyage, la colle thermofusible réactive étant choisie dans le groupe des (i) polyuréthanes réactifs, réticulant à l'humidité, fonctionnalisés par des groupes isocyanate et/ou contenant des groupes isocyanate, (ii) polyoléfines réactives, réticulant à l'humidité, fonctionnalisées par des groupes silane et/ou contenant des groupes silane, ainsi que leurs combinaisons,
la deuxième section et/ou le détergent contenant au moins un additif inactivant les groupes chimiquement réactifs de l'adhésif thermofusible réactif, l'additif présentant un groupe fonctionnel réagissant avec les groupes chimiquement réactifs de l'adhésif thermofusible réactif, l'additif étant monofonctionnel,
en particulier lors de l'application et/ou du traitement du corps de colle thermofusible, de préférence au moyen d'un pistolet à colle thermofusible, en particulier lors de la décharge et/ou de l'application de la colle thermofusible réactive d'une part et de l'agent de nettoyage d'autre part, en particulier sous la forme de la masse fondue respective,
la première section et/ou la colle thermofusible réactive d'une part et la deuxième section et/ou le produit de nettoyage d'autre part étant formés de manière optiquement différente l'un de l'autre, à savoir de couleur différente l'un de l'autre,
dans lequel au moins un colorant est incorporé dans la seconde section et/ou dans le détergent.
